# EUROPEAN PATENT APPLICATION

(11) **EP 4 485 333 A1**
(43) Date of publication of application: **01.01.2025**
(21) Application number: 23756214.5
(22) Date of filing: 06.02.2023
(51) Int. Cl.: G06Q 50/02, G06Q 10/06

(54) **INFORMATION PROCESSING DEVICE, INFORMATION PROCESSING METHOD, AND PROGRAM**

(30) Priority: 21.02.2022 JP 2022024702
(71) Applicant: Sony Group Corporation, Tokyo 108-0075 (JP)
(72) Inventor: SUZUKI, Godai, Tokyo 105-0014 (JP); FUNABASHI, Masatoshi, Tokyo 105-0014 (JP)
(74) Representative: Witte, Weller & Partner Patentanwälte mbB
(86) International application number: PCT/JP2023/003703
(87) International publication number: WO 2023/157687

(57) **Abstract**

The present technology relates to an information processing device, an information processing method, and a program capable of supporting construction of an expanded ecosystem.

A planting plan is created on the basis of a cultivation period during which plants are cultivated, a growth period during which a plant species can be grown, and biological diversity index information as an index of biological diversity, and planting plan information indicating the planting plan is generated, the planting plan including a target plant species which is set as a target of planting and a planting time for which the target plant species can be planted. The present technology can be applied to, for example, a support system that supports construction of an expanded ecosystem.

## Description

### TECHNICAL FIELD

The present technology relates to an information processing device, an information processing method, and a program, and particularly relates to, for example, an information processing device, an information processing method, and a program capable of supporting construction of an expanded ecosystem.

### BACKGROUND ART

In agriculture, planting plans are created to maximize productivity such as yield, for example, under temporal and spatial constraints and cost constraints.

Examples of a technique for creating a planting plan include techniques described in Patent Documents 1 and 2.

In the technique described in Patent Document 1, a planting period is output from input information indicating a target sales crop and a sales period on a basis of information indicating a growth period of the crop.

In the technique described in Patent Document 2, whether a planting plan is suitable for a region is evaluated on a basis of a database in which climate information of each region and crop cultivation information are associated with each other.

In both the techniques described in Patent Documents 1 and 2, a monoculture planting plan for limited types of plants is created.

In recent years, in order to maintain and improve the global environment, construction of an expanded ecosystem in a state where biological diversity and functions of the ecosystem are enhanced beyond the natural state has attracted attention. As a method of constructing an expanded ecosystem, there is Synecoculture (registered trademark).

Synecoculture (registered trademark) is an agricultural technique that improves productivity by improving biological diversity. In Synecoculture (registered trademark), it is difficult to use a monoculture planting plan.

### CITATION LIST

### PATENT DOCUMENT

Patent Document 1: WO 2015/173875 A
Patent Document 2: Japanese Patent Application Laid-Open No. 2003-006274

### SUMMARY OF THE INVENTION

### PROBLEMS TO BE SOLVED BY THE INVENTION

It is required to support construction of an expanded ecosystem by creating a planting plan that can be used in an agricultural technique utilizing biological diversity, such as Synecoculture (registered trademark).

The present technology has been made in view of such a situation, and is intended to support construction of an expanded ecosystem.

### SOLUTIONS TO PROBLEMS

According to the present technology, there is provided an information processing device or a program, the information processing device including a planting planning unit that creates a planting plan including a target plant species which is set as a target of planting and a planting time for which the target plant species can be planted, on a basis of a cultivation period during which plants are cultivated, a growth period during which a plant species can be grown, and biological diversity index information as an index of biological diversity, and generates planting plan information indicating the planting plan, and the program causing a computer to function as the information processing device.

According to the present technology, there is provided an information processing method including: creating a planting plan including a target plant species which is set as a target of planting and a planting time for which the target plant species can be planted, on a basis of a cultivation period during which plants are cultivated, a growth period during which a plant species can be grown, and biological diversity index information as an index of biological diversity, and generating planting plan information indicating the planting plan.

In the present technology, a planting plan is created on a basis of a cultivation period during which plants are cultivated, a growth period during which a plant species can be grown, and biological diversity index information as an index of biological diversity, and planting plan information indicating the planting plan is generated, the planting plan including a target plant species which is set as a target of planting and a planting time for which the target plant species can be planted.

The information processing device may be an independent device or may be an internal block which forms one device.

The program can be provided by being recorded on a recording medium or by being transmitted via a transmission medium.

### BRIEF DESCRIPTION OF DRAWINGS

Fig. 1 is a diagram illustrating a configuration example of an embodiment of an information processing system to which the present technology is applied.
Fig. 2 is a diagram illustrating a hardware configuration example of a terminal 11.
Fig. 3 is a block diagram illustrating a functional configuration example of the terminal 11.
Fig. 4 is a diagram illustrating a hardware configuration example of a server 12.
Fig. 5 is a block diagram illustrating a functional configuration example of the server 12.
Fig. 6 is a diagram explaining an example of support for construction of an expanded ecosystem that is performed by the information processing system 10.
Fig. 7 is a flowchart illustrating an example of processing of the terminal 11 in a case where a cultivation period is adopted as limit information.
Fig. 8 is a flowchart illustrating an example of processing of the server 12 in a case where a cultivation period is adopted as limit information.
Fig. 9 is a diagram illustrating an example of a growth period database.
Fig. 10 is a diagram illustrating an example of a biological diversity database.
Fig. 11 is a diagram illustrating an example of a plant species of which a growth period is within a cultivation period.
Fig. 12 is a diagram illustrating an example of a planting plan map as planting plan information indicating a planting plan created on a basis of a cultivation period, a growth period, and biological diversity index information.
Fig. 13 is a flowchart illustrating an example of processing of the terminal 11 in a case where a cultivation period and space information are adopted as limit information.
Fig. 14 is a flowchart illustrating an example of processing of the server 12 in a case where a cultivation period and space information are adopted as limit information.
Fig. 15 is a diagram illustrating an example of handling of space information in a planting planning unit 52.
Fig. 16 is a diagram illustrating an example of arrangement of plants in an occupancy permission space.
Fig. 17 is a diagram illustrating an example of a size database.
Fig. 18 is a diagram illustrating an example of a planting plan map as planting plan information indicating a planting plan created using space information of an occupancy permission space.
Fig. 19 is a diagram illustrating an example of an occupancy permission space.
Fig. 20 is a diagram illustrating an example of limit information transmitted by the terminal 11.
Fig. 21 is a diagram illustrating an example of a plant species of which a growth period is within a period from March to May that is a cultivation period, the plant species being selected as a candidate plant species on a basis of the growth period stored in a growth period database.
Fig. 22 is a diagram illustrating an example of a planting plan map as planting plan information indicating a planting plan created for an occupancy permission space including 2 × 2 × 1 blocks.
Fig. 23 is a flowchart illustrating an example of processing of the terminal 11 in a case where a cultivation period, space information, and information indicating a plant species that can be planted are adopted as limit information.
Fig. 24 is a flowchart illustrating an example of processing of the server 12 in a case where a cultivation period, space information, and information indicating a plant species that can be planted are adopted as limit information.
Fig. 25 is a diagram illustrating another example of the biological diversity database.
Fig. 26 is a diagram illustrating an example of dissimilarity between plant species.
Fig. 27 is a diagram illustrating grouping of plant species by hierarchical clustering.
Fig. 28 is a diagram illustrating an example of a group list.
Fig. 29 is a diagram illustrating an example of a climate database included in a database 51 in a case where limit information includes information indicating a planting point.
Fig. 30 is a diagram illustrating another example of the growth period database.
Fig. 31 is a flowchart illustrating an example of processing of the terminal 11 in a case where a cultivation period, space information, and information indicating a planting point are adopted as limit information.
Fig. 32 is a flowchart illustrating an example of processing of the server 12 in a case where a cultivation period, space information, and information indicating a planting point are adopted as limit information.
Fig. 33 is a diagram illustrating an example of a planting plan GUI as planting plan information.
Fig. 34 is a flowchart illustrating an example of processing of the server 12 in a case where the database 51 includes a germination time database and a harvest database.
Fig. 35 is a diagram illustrating a first example of additional information.
Fig. 36 is a diagram illustrating a second example of additional information.
Fig. 37 is a diagram illustrating a third example of additional information.
Fig. 38 is a diagram illustrating another example of the size database.
Fig. 39 is a diagram illustrating an example of a section having a shape other than a rectangular shape.
Fig. 40 is a diagram illustrating an example in which a region in an x direction and a y direction in an occupied space in a case where triangular sections are adopted is expressed by the number of sections and arrangement of sections.
Fig. 41 is a diagram illustrating an example in which a region in an x direction and a y direction in an occupied space in a case where triangular sections are adopted is expressed only by the number of sections.
Fig. 42 is a diagram illustrating still another example of the size database.
Fig. 43 is a diagram illustrating still another example of the growth period database.
Fig. 44 is a diagram illustrating an example in which a candidate plant species is selected on a basis of a growth period stored in the growth period database.

### MODE FOR CARRYING OUT THE INVENTION

### <One Embodiment of Information Processing System to which Present Technology is applied>

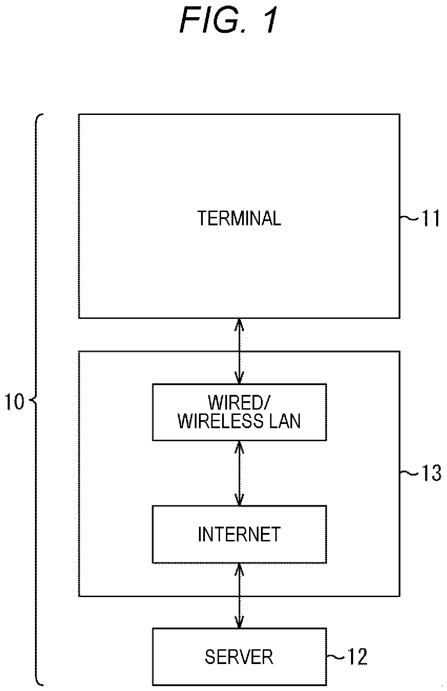

Fig. 1 is a diagram illustrating a configuration example of one embodiment of an information processing system to which the present technology is applied.

The information processing system 10 constitutes, for example, a support system that supports construction of an expanded ecosystem by creating and providing a planting plan which can be used in agriculture utilizing biological diversity, such as Synecoculture (registered trademark).

The information processing system 10 includes one or more terminals 11 and one or more servers 12. The terminal 11 and the server 12 can communicate with each other via a network 13 including a wired local area network (LAN), a wireless LAN, the Internet, a mobile communication network such as 5G, and the like.

In a case where a plurality of servers 12 is provided in the information processing system 10, the plurality of servers 12 can be caused to perform processing described below in a distributed manner. Further, for the plurality of servers 12, terminals 11 for which the servers are responsible can be assigned, and each server 12 can be caused to perform processing only for the terminals 11 for which the server is responsible.

Moreover, the information processing system 10 can cause the terminal 11 to perform some or all of the processing performed by the server 12. In a case where the terminal 11 is caused to perform all the processing performed by the server 12, the information processing system 10 can be configured without providing the server 12.

The terminal 11 is configured with, for example, a personal computer (PC), a mobile terminal such as a smartphone, or the like, and is operated by the user. The terminal 11 transmits required information to the server 12, and receives information from the server 12 (via the network 13).

The server 12 receives information from the terminal 11 (via the network 13), and performs various types of processing using the information from the terminal 11 as necessary. Furthermore, the server 12 transmits required information to the terminal 11 (via the network 13).

### <Configuration Example of Terminal 11>

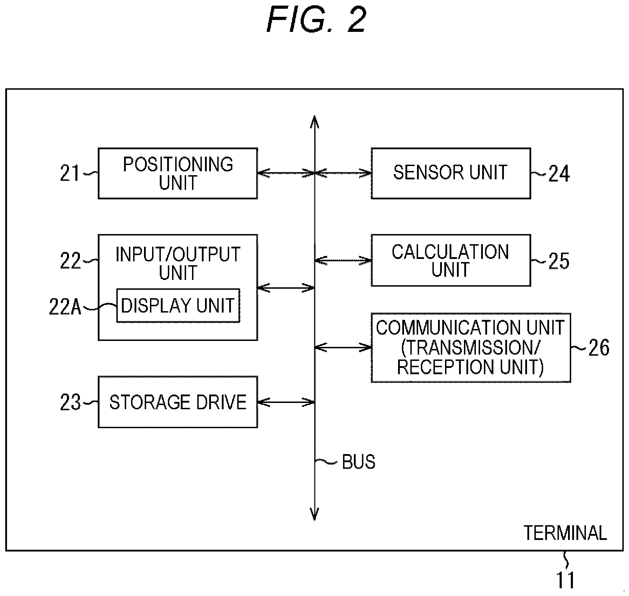

Fig. 2 is a diagram illustrating a hardware configuration example of the terminal 11.

The terminal 11 includes a positioning unit 21, an input/output unit 22, a storage drive 23, a sensor unit 24, a calculation unit 25, and a communication unit 26. The positioning unit 21 to the communication unit 26 are connected to each other via a bus, and can exchange information.

The positioning unit 21 constitutes, for example, a global navigation satellite system (GNSS), measures (positions) a position of the terminal 11, and outputs position information indicating the position, for example, latitude and longitude (and required altitude).

The input/output unit 22 includes a keyboard, a touch panel, a microphone, and the like (not illustrated), and receives various inputs such as an operation from the user. Furthermore, the input/output unit 22 includes a display unit 22A and a speaker (not illustrated), and presents information to the user by displaying an image, outputting a sound, or the like.

The storage drive 23 is configured with, for example, a solid state drive (SSD), a hard disk drive (HDD), or the like. A program to be executed by the calculation unit 25, data required for processing of the calculation unit 25, and the like are stored (recorded) in the storage drive 23.

The sensor unit 24 includes a camera that captures an image by sensing light, a hygrometer that senses humidity, a thermometer that senses a temperature, an angular velocity sensor (gyro sensor) that detects angular velocity, a ranging sensor that measures a distance, and various other necessary sensors. The sensor unit 24 senses various physical quantities and outputs sensor information such as an image which is a sensing result.

The calculation unit 25 includes a processor such as a central processing unit (CPU) or a digital signal processor (DSP), and a memory such as a random access memory (RAM), and performs various types of processing by executing a program stored in the storage drive 23.

The program to be executed by the calculation unit 25 can be installed in a computer as the terminal 11 from, for example, a removable recording medium such as a digital versatile disc (DVD) or a memory card. Furthermore, the program can be downloaded to the computer as the terminal 11, for example, via the network 13 or the like and installed.

The communication unit 26 functions as a transmission unit that transmits information via the network 13 or the like and a reception unit that receives information via the network 13 or the like.

Note that the terminal 11 can be configured without providing one or both of the positioning unit 21 and the sensor unit 24.

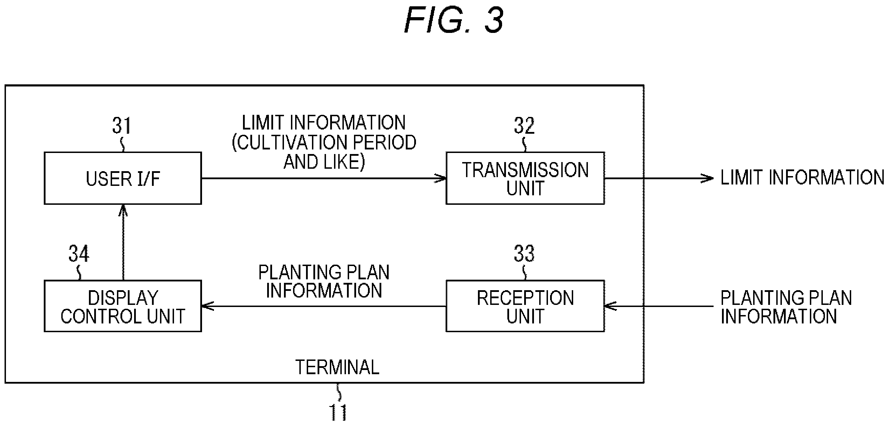

Fig. 3 is a block diagram illustrating a functional configuration example of the terminal 11.

The functional configuration of the terminal 11 illustrated in Fig. 3 is functionally implemented by the calculation unit 25 in Fig. 2 executing a program.

In Fig. 3, the terminal 11 includes a user interface (I/F) 31, a transmission unit 32, a reception unit 33, and a display control unit 34.

The user I/F 31 receives an operation of the terminal 11 by the user, and supplies, to the transmission unit 32, a command requesting the server 12 to perform processing, limit information, or other information to be used for processing of the server 12 in response to the operation.

The limit information is information that directly or indirectly limits plant species to be planted in the planting plan.

As the information that directly limits the plant species to be planted, for example, information indicating plant species that can be planted, that is, information indicating a plant species that can be a target of planting, can be adopted.

As the plant species that can be planted, for example, plant species that can be obtained by the user, plant species that the user desires to plant, and the like can be adopted.

According to the limit information indicating the plant species that can be planted, the plant species to be planted are limited to only the plant species that can be planted, that is, only the plant species that can be obtained by the user and the plant species that the user desires to plant.

As the information that indirectly limits the plant species to be planted, for example, information indicating a cultivation period in which the plant is cultivated, that is, information indicating a cultivation period that the user desires as a period in which the plant is cultivated, can be adopted.

In addition, as the information that indirectly limits the plant species to be planted, for example, information indicating a space in which occupancy of the plant is permitted (hereinafter, also referred to as an occupancy permission space), a climate of the occupancy permission space, that is, a planting environment for planting plants, such as a climate of a point at which the plant is to be planted (planting point), and the like can be adopted.

Note that, since the climate of the planting point at which the plant is to be planted can be specified from (a position of) the planting point, information indicating the planting point can be adopted as the limit information instead of information indicating the climate of the planting point.

According to the limit information indicating the cultivation period and the planting environment, the plant species to be planted is limited only to the plant species to be grown in the cultivation period and the plant species that can be grown or is appropriate in the planting environment.

In the present embodiment, the limit information includes at least (information indicating) the cultivation period.

The user I/F 31 receives a user's operation, and displays an image according to display control of the display control unit 34. The user I/F 31 can present information to the user by displaying an image, outputting a sound, or the like.

The transmission unit 32 transmits various types of information to the server 12 and the like. For example, the transmission unit 32 transmits the limit information and the like from the user I/F 31 to the server 12.

The reception unit 33 receives various types of information from the server 12 or the like. For example, the reception unit 33 receives planting plan information and the like transmitted from the server 12, and supplies the planting plan information and the like to the display control unit 34.

The display control unit 34 performs display control for causing the user I/F 31 to display information. For example, the display control unit 34 causes the user I/F 31 to display the planting plan information and the like from the reception unit 33.

The planting plan information is information indicating a planting plan, and the planting plan includes at least (information indicating) a plant species to be planted and (information indicating) a planting time (period) in which the plant species can be planted.

The planting plan may further include (information indicating) a planting position (area) at which the plant species is to be planted. In addition, the planting plan can include (information indicating) timings of various events from sowing or planting of seedlings to harvesting, such as a timing of sowing or planting (introducing) of seedlings, a timing of germination, and a timing of harvesting.

As the planting plan information, a planting plan map in which a plant species to be planted, a growth period in which the plant species can grow, a planting position of the plant, and the like are listed in a time series and a table form, or the like, a planting plan graphical user interface (GUI) in which the planting plan is represented in a time series by an image such as a 3D model or an illustration, or the like can be adopted.

### <Configuration Example of Server 12>

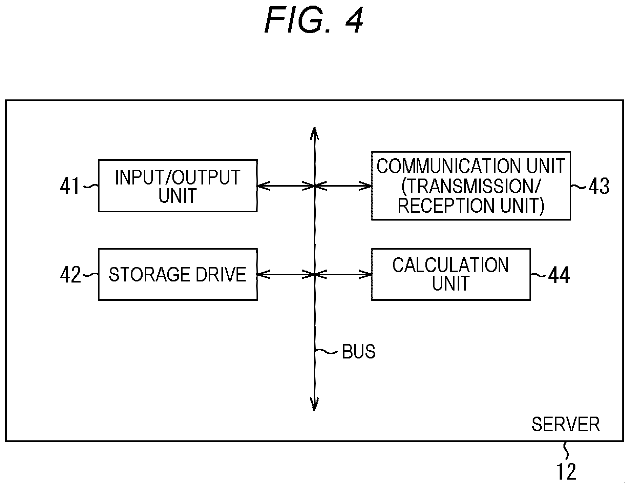

Fig. 4 is a diagram illustrating a hardware configuration example of the server 12.

The server 12 includes an input/output unit 41, a storage drive 42, a communication unit 43, and a calculation unit 44. The input/output unit 41 to the calculation unit 44 are connected to each other via a bus, and can exchange information.

The input/output unit 41 includes a keyboard, a touch panel, a microphone, and the like (not illustrated), and receives operations and other various inputs from an operator or the like of the server 12. Furthermore, the input/output unit 22 includes a display unit (display) and a speaker (not illustrated), and presents information to an operator or the like by displaying an image, outputting a sound, or the like.

The storage drive 42 includes, for example, an SSD, an HDD, or the like. A program to be executed by the calculation unit 44, data required for processing of the calculation unit 44, and the like are stored (recorded) in the storage drive 42.

The communication unit 43 functions as a transmission unit that transmits information via the network 13 and a reception unit that receives information via the network 13.

The calculation unit 44 includes a processor such as a CPU or a DSP, and a memory such as a RAM, and performs various types of processing such as detection of various types of data, calculation, evaluation, and processing of various events such as a key event by executing the program stored in the storage drive 42.

The program to be executed by the calculation unit 44 can be installed in a computer as the server 12 from, for example, a removable recording medium such as a DVD or a memory card. Furthermore, the program can be downloaded to the computer as the server 12, for example, via the network 13 or the like and installed.

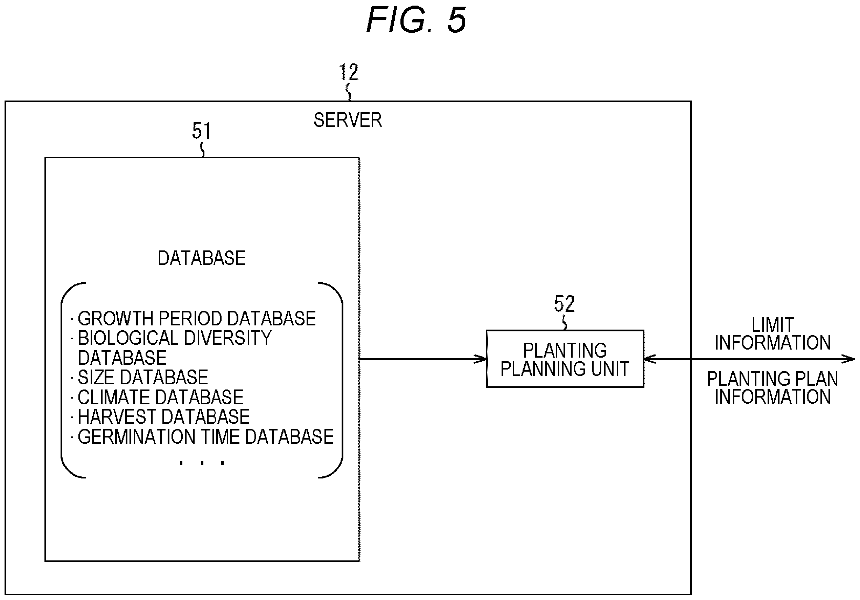

Fig. 5 is a block diagram illustrating a functional configuration example of the server 12.

The functional configuration of the server 12 in Fig. 5 is functionally implemented by the calculation unit 44 in Fig. 4 executing a program.

In Fig. 5, the server 12 includes a database 51 and a planting planning unit 52.

Note that processing performed by the server 12 in Fig. 5 can be separately performed by a plurality of servers.

That is, in a case where the server 12 includes a plurality of servers, a function of the database 51, a function of the planting planning unit 52, or functions of both the database 51 and the planting planning unit 52 can be divided for the plurality of servers.

Furthermore, some or all of the processing performed by the server 12 in Fig. 5 can be performed by the terminal 11.

The database 51 includes various databases.

For example, the database 51 includes a growth period database and a biological diversity database.

Moreover, the database 51 can include a size database, a climate database, a harvest database, a germination time database, and the like.

The growth period database stores, for each plant species, a growth period during which the plant species can grow.

The biological diversity database stores biological diversity index information serving as an index of biological diversity of plants. As the biological diversity index information, for example, information of phylogenetic classifications of plants can be adopted.

The biological diversity of the plant can be evaluated by, for example, the functional diversity of the plant, and thus, information serving as an index of the functional diversity of the plant can also be adopted as the biological diversity index information.

As the information serving as an index of the functional diversity of the plant, for example, information indicating microbiota in a co-occurrence relationship with the plant species, (types of) metabolites appearing in the plant species, and the like can be used. Therefore, information indicating microbiota in a co-occurrence relationship with the plant species and metabolites appearing in the plant species, and the like can also be adopted as the biological diversity index information.

The size database stores size information indicating a size of the plant species (in a grown state and the like) for each plant species.

The climate database stores climate information representing a climate at each point.

The harvest database stores, for each plant species, a required harvest period that is necessary for the plant species to be in a state suitable for harvest, for example, a period from sowing or planting of seedlings to a timing required for the plant species to reach a suitable state for harvest, such as a state where flowers have bloomed, a state where buds are formed, a state where a crop is mature, or a state immediately before the crop is mature.

The germination time database stores, for each plant species, a germination time (a month or the like) at which the plant species germinates.

As a part or all of the databases included in the database 51, an external database, for example, a database on the Internet, or the like can be used.

For example, as the climate database, AMeDAS (https://www.jma.go.jp/bosai/map.html#5/34.488/137/&elem= temp&contents=amedas&interval=60) of the Meteorological Agency that provides data of weather stations installed all over Japan, the mesh agricultural meteorological data system (https://amu.rd.naro.go.jp/) of the Agriculture and Food Research Organization that is a national research and development agency and provides mesh agricultural meteorological data obtained by reanalyzing AMeDAS data and converting the reanalyzed data into data in reference region mesh units, Google's Google Earth Engine (https://earthengine.google.com/) that collects information from databases which are mainly constructed from pieces of sensor data from meteorological satellites and include meteorological information and climate information for each of points all over the Earth, and the like can be used.

The planting planning unit 52 receives the limit information transmitted from the terminal 11.

The planting planning unit 52 creates a planting plan by using, for example, mathematical programming such as linear programming or nonlinear programming, a search algorithm such as a linear search or genetic algorithm, or the like on a basis of the limit information from the terminal 11 and various databases included in the database 51.

For example, the planting planning unit 52 creates a planting plan on a basis of the cultivation period included in the limit information from the terminal 11, the growth period stored in the growth period database, the biological diversity index information stored in the biological diversity database, and the like.

Then, the planting planning unit 52 generates planting plan information indicating the planting plan, and transmits the planting plan information to the terminal 11.

### <Example of Support for Construction of Expanded Ecosystem by Information Processing System 10>

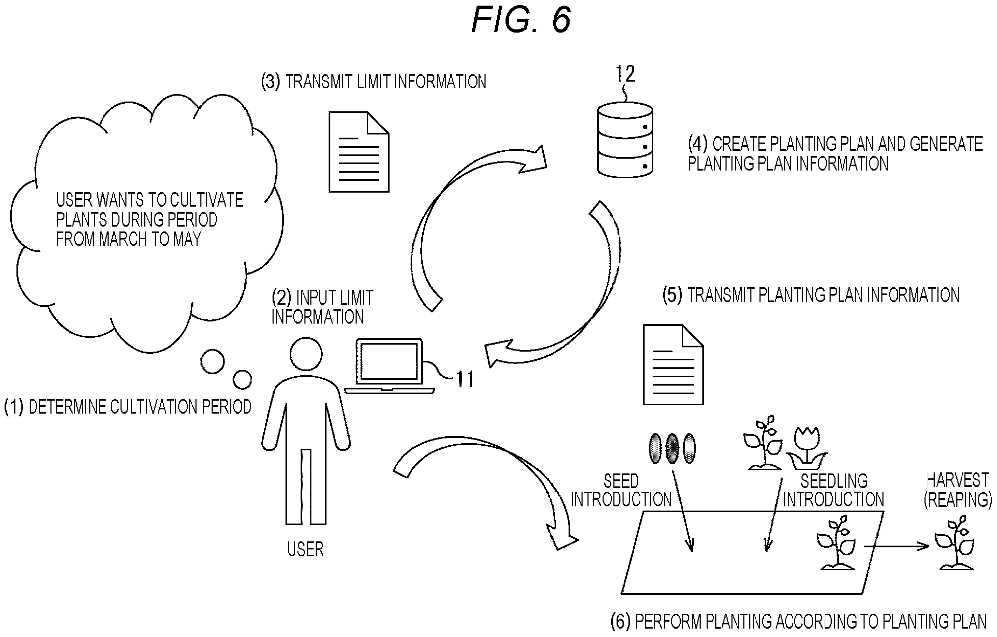

Fig. 6 is a diagram explaining an example of support for construction of an expanded ecosystem that is performed by the information processing system 10.

Fig. 6 illustrates an example of support for construction of an expanded ecosystem that is performed by providing a planting plan (information) for realizing a vegetation strategy for constructing an expanded ecosystem.

The user determines a cultivation period in which the user desires to cultivate the plant (1). In Fig. 6, the user determines a period from March to May as the cultivation period.

The user inputs the limit information such as the cultivation period by operating the user I/F 31 of the terminal 11 (2).

The transmission unit 32 of the terminal 11 transmits the limit information which is input from the user to the server 12 (3).

In the server 12, the planting planning unit 52 receives the limit information from the terminal 11. The planting planning unit 52 creates a planting plan on a basis of the limit information from the terminal 11 and various databases included in the database 51, and generates planting plan information indicating the planting plan (4).

The planting planning unit 52 creates a planting plan including at least (information indicating) a plant species to be planted and (information indicating) a planting time (period) for which the plant species can be planted, the plant species being selected from the plant species which can be grown during the cultivation period such that the biological diversity is enhanced.

Then, the planting planning unit 52 transmits the planting plan information to the terminal 11 (5).

The reception unit 33 of the terminal 11 receives the planting plan information from the planting planning unit 52 of the server 12.

Then, the display control unit 34 of the terminal 11 causes the user I/F 31 to display the planting plan information.

In accordance with the planting plan indicated by the planting plan information displayed on the terminal 11, the user performs planting of the plant in the farmland, that is, planting such as sowing of seeds (seed introduction) (sowing) or planting of seedlings (seedling introduction), or reaping such as harvesting of grown plants (6).

The planting plan created by the planting planning unit 52 is a plan for enhancing (improving) the biological diversity. Therefore, the user performs planting or the like of the plant in the farmland according to such a planting plan, and thus an expanded ecosystem in which the biological diversity is enhanced beyond the natural state is constructed.

Therefore, it is possible to support construction of an expanded ecosystem.

### <Case where Cultivation Period is adopted as Limit Information>

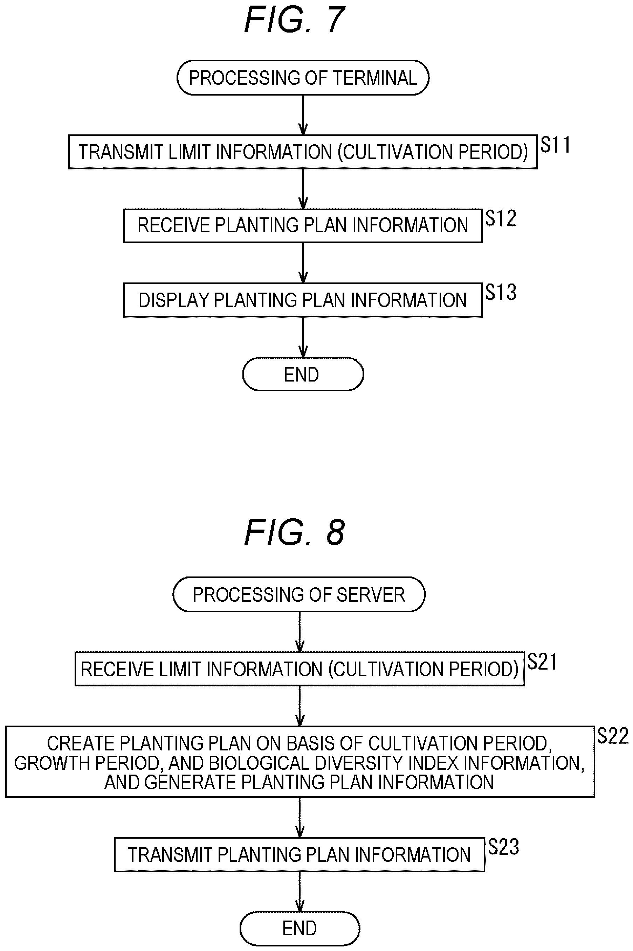

Fig. 7 is a flowchart illustrating an example of processing of the terminal 11 in a case where the cultivation period is adopted as the limit information.

In the terminal 11, in step S11, the transmission unit 32 waits for the cultivation period to be input by an operation of the user I/F 31 by the user, and transmits the cultivation period as the limit information. Then, the processing proceeds to step S12.

In step S12, the reception unit 33 waits for the planting plan information to be transmitted from the server 12, receives the planting plan information, and supplies the planting plan information to the display control unit 34. Then, the processing proceeds to step S13.

In step S13, the display control unit 34 causes the user I/F 31 to display the planting plan information from the reception unit 33, and the processing is ended.

Fig. 8 is a flowchart illustrating an example of processing of the server 12 in a case where the cultivation period is adopted as the limit information.

In the server 12, in step S21, the planting planning unit 52 waits for the limit information to be transmitted from the terminal 11, receives the limit information, and stores the limit information in a storage unit (not illustrated). Then, the processing proceeds to step S22.

In step S22, the planting planning unit 52 creates a planting plan on a basis of the cultivation period as the limit information from the terminal 11, the growth period stored in the growth period database, and the biological diversity index information stored in the biological diversity database. Moreover, the planting planning unit 52 generates planting plan information indicating the planting plan, and the processing proceeds from step S22 to step S23.

In step S23, the planting planning unit 52 transmits the planting plan information to the terminal 11, and the processing is ended.

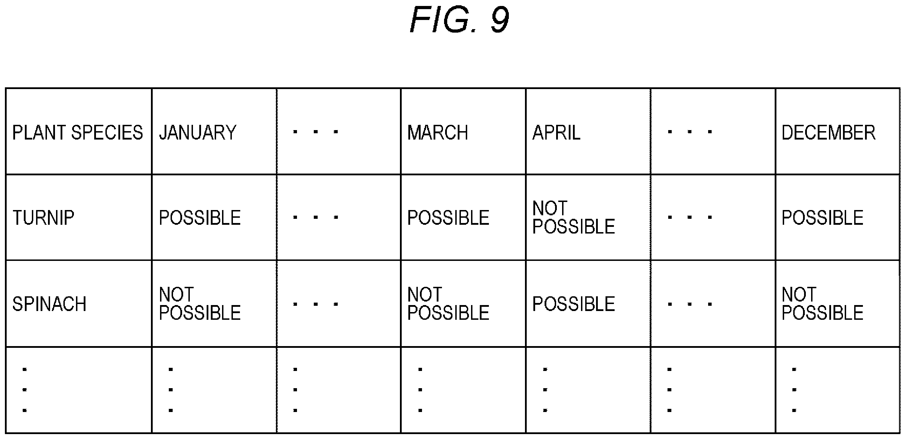

Fig. 9 is a diagram illustrating an example of the growth period database.

In the growth period database, for each plant species, a growth period during which the plant species can grow is stored. In Fig. 9, "possible" or "impossible", which is information indicating whether or not growth is possible in that month, is set for each month. Thus, the period for which "possible" is set is indicated as the growth period.

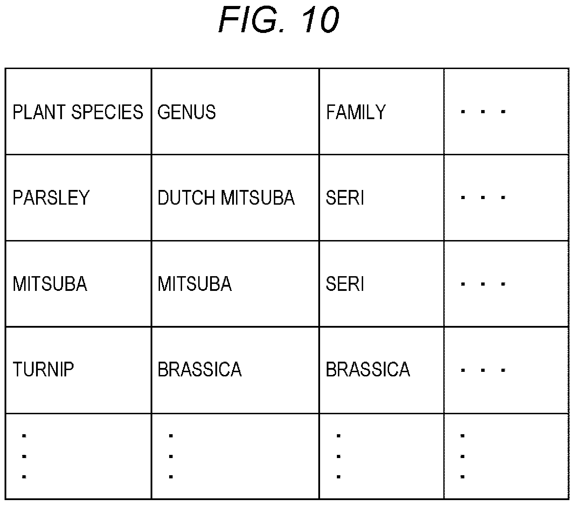

Fig. 10 is a diagram illustrating an example of the biological diversity database.

The biological diversity index information is stored in the biological diversity database.

Fig. 10 illustrates information of phylogenetic classifications of plants as the biological diversity index information.

The information indicating the phylogenetic classification includes, for each plant species, information indicating a genus, a family, an order, and the like for classifying the plant species.

In a case where the biological diversity is evaluated by using, as an index, (information indicating) the phylogenetic classification as the biological diversity index information, for example, the number of genera or families of plants can be specified using the phylogenetic classification, and the number of genera or families can be used as the biological diversity.

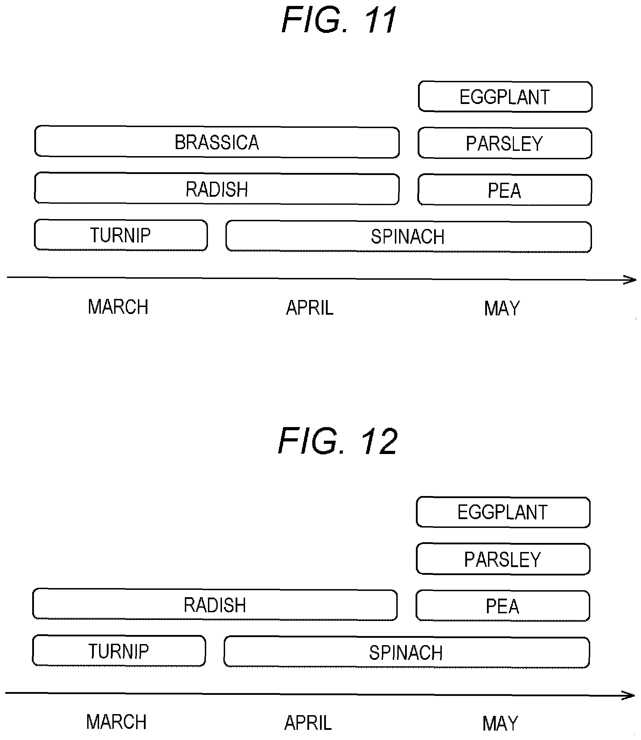

Fig. 11 is a diagram illustrating an example of plant species of which the growth period is within the cultivation period.

The planting planning unit 52 selects plant species to be planted from plant species that can be grown during the cultivation period so as to enhance the biological diversity.

Therefore, on a basis of the cultivation period and the growth period stored in the growth period database, the planting planning unit 52 selects (specifies) a plant species of which the growth period is within the cultivation period, for each division period obtained by dividing the cultivation period into small sections, for example, for each division period such as each week or each month within the cultivation period.

Then, the planting planning unit 52 generates a plant species list in which the plant species selected for each division period are listed.

Fig. 11 illustrates plant species which are selected for each division period and of which the growth period is within the cultivation period.

In Fig. 11, in a case where the cultivation period is, for example, a period of three months from March to May and the division period is set to, for example, one month, plant species of which the growth period is within the cultivation period are selected for each of the division periods of March, April, and May.

In Fig. 11, rape, radish, and turnip are selected for March, and rape, radish, and spinach are selected for April. Furthermore, for May, eggplant, parsley, pea (bean), and spinach are selected.

The planting planning unit 52 selects plant species to be planted such that the biological diversity is further enhanced from plant species of which the growth period is within the cultivation period and which are selected for each division period.

Then, the planting planning unit 52 creates a planting plan including at least (information indicating) a plant species to be planted and (information indicating) a planting time for which the plant species can be planted, and generates planting plan information indicating the planting plan.

Fig. 12 is a diagram illustrating an example of a planting plan map as the planting plan information indicating the planting plan created on a basis of the cultivation period, the growth period, and the biological diversity index information.

As described with reference to Fig. 11, the planting planning unit 52 selects a plant species of which the growth period is within the cultivation period as a candidate for the plant species that is a target of planting (hereinafter, also referred to as a candidate plant species).

Moreover, the planting planning unit 52 selects a plant species to be planted (a plant species that is a target of planting) (hereinafter, also referred to as a target plant species) in each division period from among the candidate plant species such that the biological diversity is further enhanced, for example, such that the number of species is minimized while maintaining a diversity rate at 100%.

The diversity rate means a ratio of the biological diversity of the target plant species to the biological diversity of the candidate plant species that can be grown in the same division period.

For example, for the plant species which is illustrated in Fig. 11 and of which the growth period is within the cultivation period, rape, radish, and turnip can be grown in March.

On the other hand, in a case where the number of species of plant species is adopted as the biological diversity, the biological diversity of the candidate plant species that can be grown in March and include rape, radish, and turnip is three species.

In this case, for example, in a case where radish and turnip are selected as the target plant species from among rape, radish, and turnip, the biological diversity of radish and turnip as the target plant species is two species, and thus the diversity rate is 2/3 × 1000 = 66.6···%.

In a case where the biological diversity index information is, for example, the phylogenetic classification illustrated in Fig. 10 and the number of genera of plants is adopted as the biological diversity by using, as an index, the phylogenetic classification, the diversity rate is as follows.

For the candidate plant species of rape, radish, and turnip that can be grown in March, rape and turnip are plants belonging to the Brassica family and the Brassica genus, and radish is a plant belonging to the Brassica family and the Radish genus. Thus, the number of genera as the biological diversity of the candidate plant species is two of the Brassica genus and the Radish genus.

For example, in a case where one or both of rape and turnip are selected as the target plant species from among the candidate plant species of rape, radish, and turnip that can be grown in March, the number of genera as the biological diversity of the target plant species is one of only the Brassica genus. In this case, the diversity rate is 50%.

Furthermore, for example, in a case where radish and one of rape and turnip are selected as the target plant species from among the candidate plant species of rape, radish, and turnip that can be grown in March, the number of genera as the biological diversity of the target plant species is two of the Brassica genus and the radish genus. In this case, the diversity rate is 100%.

For March when the candidate plant species of rape, radish, and turnip can be grown, by selecting radish and one of rape and turnip as the target plant species, the number of species can be minimized while maintaining the diversity rate at 100%.

Which of radish and rape or radish and turnip is selected as the target plant species can be determined, for example, in a random manner.

In addition, the target plant species can be selected on a basis of, for example, any index such as an index indicating that seeds or seedlings are inexpensive or an index indicating that a region where planting is performed has a high yield.

In Fig. 12, in March, radish and turnip are selected as the target plant species.

The planting planning unit 52 selects a target plant species, for example, for each month as each division period in the cultivation period. Then, the planting planning unit 52 sets the division period for which the target plant species is selected as a planting time (period) of the target plant species, and creates a planting plan including (information indicating) the target plant species and the planting time of the target plant species.

By selecting the target plant species from among the candidate plant species such that the number of species is minimized while maintaining the diversity ratio at 100%, in a case of creating a planting plan, it is possible to create a planting plan that enhances the biological diversity and reduces the planting area.

According to such a planting plan, the user can easily recognize a plant species (target plant species), which should be planted in order to further enhance the biological diversity, and a planting time of the plant species in a desired cultivation period.

### <Case where Cultivation Period and Space Information are adopted as Limit Information>

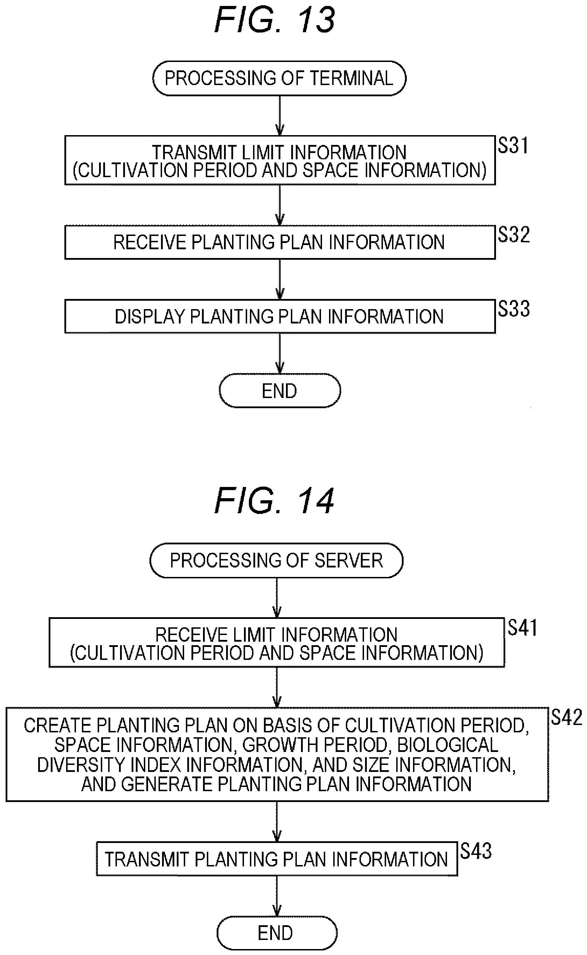

Fig. 13 is a flowchart illustrating an example of processing of the terminal 11 in a case where the cultivation period and space information are adopted as the limit information.

The space information is information indicating a size of an occupancy permission space in which occupancy of plants is permitted, and indicates a place where the plants are to be planted, for example, a size (scale) of a farmland.

In the present embodiment, in order to simplify the description, it is assumed that the site of the farmland is rectangular.

In this case, for an open-field cultivation farmland, the user can input, for example, longitudinal and lateral lengths of the site of the farmland as the space information. For a vinyl house cultivation farmland, the user can input, for example, longitudinal and lateral lengths of a vinyl house and a length (height) from the ground surface to a ceiling of the vinyl house as the space information.

Note that, in a case where the user desires to limit a height of the plant in the open-field cultivation farmland, the user can input the height as the space information in addition to the longitudinal and lateral lengths of the site of the farmland.

In the terminal 11, in step S31, the transmission unit 32 waits for the cultivation period and the space information to be input by an operation of the user I/F 31 by the user, and transmits the cultivation period and the space information as the limit information. Then, the processing proceeds to step S32.

Thereafter, in step S32 and step S33, the terminal 11 performs pieces of processing that are similar to pieces of processing of step S12 and step S13 in Fig. 7.

Fig. 14 is a flowchart illustrating an example of processing of the server 12 in a case where the cultivation period and the space information are adopted as the limit information.

In a case where the cultivation period and the space information are adopted as the limit information, the database 51 includes a size database in addition to the growth period database and the biological diversity database.

In the server 12, in step S41, the planting planning unit 52 waits for the limit information to be transmitted from the terminal 11, receives the limit information, and stores the limit information in a storage unit (not illustrated). Then, the processing proceeds to step S42.

In step S42, the planting planning unit 52 creates a planting plan on a basis of the cultivation period and the space information as the limit information from the terminal 11, the growth period stored in the growth period database, the biological diversity index information stored in the biological diversity database, and the size information stored in the size database. Moreover, the planting planning unit 52 generates planting plan information indicating the planting plan, and the processing proceeds from step S42 to step S43.

In step S43, the planting planning unit 52 transmits the planting plan information to the terminal 11, and the processing is ended.

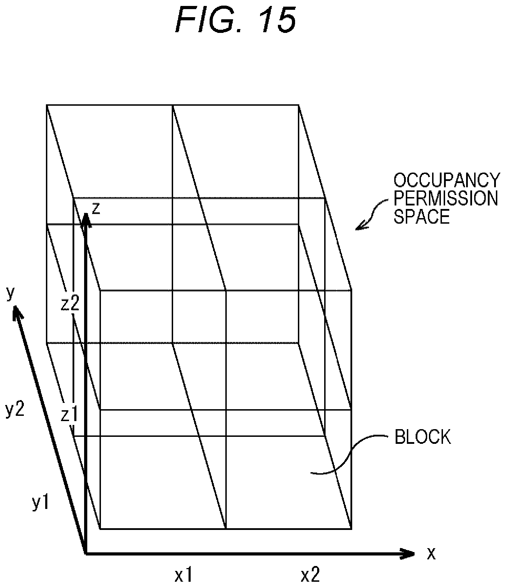

Fig. 15 is a diagram illustrating an example of handling of the space information in the planting planning unit 52.

The planting planning unit 52 handles the space information from the terminal 11 as space information indicating the occupancy permission space, and handles the occupancy permission space indicated by the space information, for example, in units of blocks.

That is, the planting planning unit 52 respectively sets the longitudinal and lateral lengths and the height, which are indicated by the space information, to longitudinal and lateral lengths and a height of the occupancy permission space.

Here, as described in Fig. 13, the user inputs, as the space information, the longitudinal and lateral lengths of the farmland, and further the height of the farmland as necessary. Therefore, the space information from the terminal 11 may not include the height.

In a case where the height is not included in the space information from the terminal 11, the planting planning unit 52 sets, for example, a default value, or a maximum height, an average value, or the like of the heights of the plants indicated by the size information stored in the size database, as the height of the occupancy permission space.

Assuming that, for example, rectangular parallelepiped blocks having the same size are arranged without gaps in the occupancy permission space and the occupancy permission space is configured with blocks, the planting planning unit 52 (virtually) arranges plants in the occupancy permission space, that is, the farmland, in units of blocks.

Here, for example, it is assumed that the block included in the occupancy permission space is specified at a position of a three-dimensional coordinate system in which a lateral direction, a longitudinal (depth) direction, and a height direction of the occupancy permission space are respectively set as an x axis, a y axis, and a z axis, and a vertex of the occupancy permission space on a lower left front side is set as an origin. As the position (coordinate) of the block, for example, a center (center of gravity) of the block in the three-dimensional coordinate system is adopted.

In Fig. 15, the occupancy permission space includes 2 × 2 × 2 blocks in the x direction × the y direction × the z direction.

It is assumed that 1/2 and 3/2 of the lateral length of the block are respectively represented as x1 and x2, that 1/2 and 3/2 of the longitudinal length (depth) of the block are respectively represented as y1 and y2, and that 1/2 and 3/2 of the height of the block are respectively represented as z1 and z2.

In this case, for example, the position (x, y, z) of the block on the lower left front side among the 2 × 2 × 2 blocks included in the occupancy permission space is represented by (x1, y1, z1). Furthermore, for example, the position (x, y, z) of the block on an upper right rear side is represented by (x2, y2, z2). Hereinafter, the block at the position (coordinate) (x, y, z) is also referred to as a block (x, y, z).

The blocks included in the occupancy permission space may all be blocks having the same size or blocks having different sizes.

For example, blocks having the same size and all cubic shapes can be adopted as the blocks included in the occupancy permission space. Furthermore, for example, blocks having the same size and a cubic shape can be adopted as first-stage blocks from the bottom of the occupancy permission space, and blocks that have a rectangular parallelepiped shape, have the same bottom surface as the first-stage blocks, and have twice the height of the first-stage blocks, and the like can be adopted as blocks at second and higher stages.

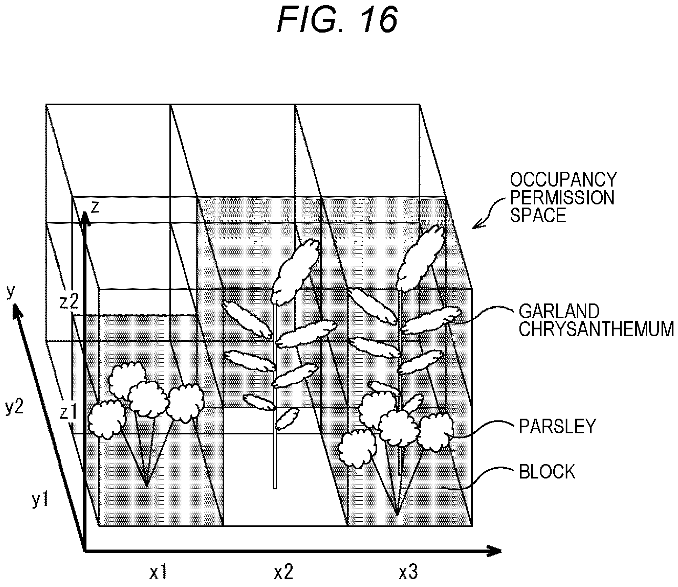

Fig. 16 is a diagram illustrating an example of arrangement of plants in the occupancy permission space.

In Fig. 16, the occupancy permission space includes 3 × 2 × 2 blocks.

As described with reference to Fig. 11, the planting planning unit 52 selects plant species of which the growth period is within the cultivation period as candidate plant species for each division period on a basis of the cultivation period and the growth period stored in the growth period database.

Then, the planting planning unit 52 creates a planting plan by (virtually) arranging the candidate plant species in the occupancy permission space for each division period.

The planting planning unit 52 arranges (an individual of) the candidate plant species in an empty block which is not occupied by another plant, that is, an empty block in which another plant is not arranged, in the occupancy permission space.

In a case where a candidate plant species is planted in the occupancy permission space, a block of which a volume equal to or larger than a threshold value is occupied by the candidate plant species is referred to as an occupied block occupied by the candidate plant species.

In Fig. 16, parsley and garland chrysanthemum as candidate plant species are planted in the occupancy permission space. Then, the blocks (x1, y1, z1) and (x3, y1, z1) are occupied blocks each of which is occupied by one parsley. Moreover, the blocks (x2, y1, z2) and (x3, y1, z2) are occupied blocks each of which is occupied by one garland chrysanthemum. The other blocks are empty blocks that are not occupied by plants.

Note that, in Fig. 16, each of individuals of parsley and garland chrysanthemum occupies one block, but a plant individual to be arranged in the occupancy permission space may occupy a plurality of blocks.

Since positions of leaves of parsley are low, in a case where parsley is planted in the occupancy permission space, parsley occupies the first-stage block (from the bottom) at a position where parsley is planted. For this reason, parsley is arranged in the first-stage block in a process in which the planting planning unit 52 calculates (creates) a planting plan as a solution by mathematical programming or a search algorithm.

On the other hand, since positions of leaves of garland chrysanthemum are high, in a case where garland chrysanthemum is planted in the occupancy permission space, the garland chrysanthemum occupies the second-stage block (from the bottom) at a position where garland chrysanthemum is planted, but does not occupy a volume equal to or larger than the threshold value for the first-stage block. For this reason, garland chrysanthemum is arranged in the second-stage block in a process in which the planting planning unit 52 calculates a planting plan as a solution by mathematical programming or a search algorithm.

As described above, since parsley and garland chrysanthemum are arranged at different heights (heights of occupied spaces), that is, are arranged in blocks having different z coordinates, parsley and garland chrysanthemum can be arranged even in a case where the x coordinate and the y coordinate of the blocks are at the same position. This means that a plurality of plant species can be planted and coexist on the ground surface of the same first-stage block.

In Fig. 16, arranging parsley in the first-stage block (x3, y1, z1) and arranging garland chrysanthemum in the second-stage block (x3, y1, z2) having the same x coordinate and the same y coordinate as those of the block (x3, y1, z1) and a different z coordinate means planting parsley and garland chrysanthemum on the ground surface of the first-stage block (x3, y1, z1).

The planting planning unit 52 selects the candidate plant species arranged in the occupancy permission space as the target plant species.

The arrangement of the candidate plant species in the occupancy permission space is performed such that the biological diversity is enhanced and the candidate plant species are filled in the occupancy permission space as much as possible on a basis of the biological diversity index information stored in the biological diversity database and the size information stored in the size database.

Specifically, the arrangement of the candidate plant species in the occupancy permission space is performed such that the space filling rate and the diversity rate are increased, for example, the space filling rate × the diversity rate is increased (ideally maximized).

The space filling rate represents a proportion at which the candidate plant species (target plant species) arranged in the occupancy permission space occupies the occupancy permission space, and can be calculated by, for example, the number of blocks in which the candidate plant species is arranged/the number of blocks in the occupancy permission space × 100%.

In the arrangement of the candidate plant species in the occupancy permission space, the occupied block occupied by the candidate plant species is specified using the size information stored in the size database.

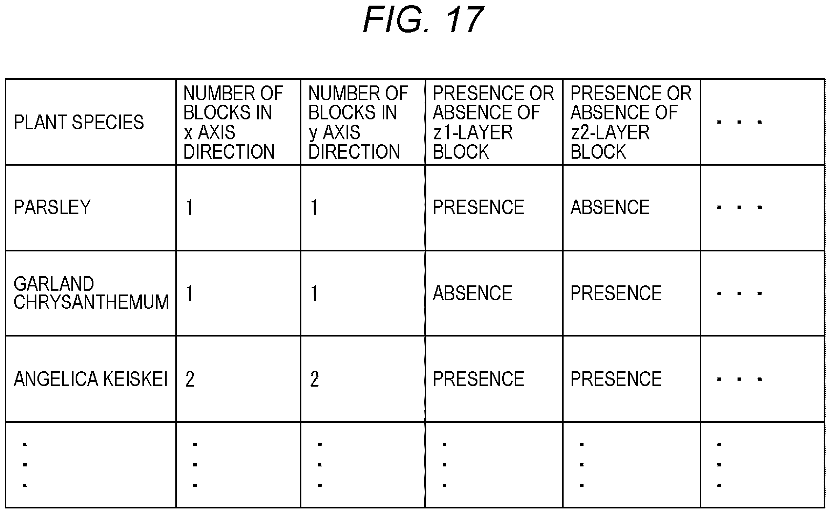

Fig. 17 is a diagram illustrating an example of the size database.

The size database stores size information indicating a size of each plant species.

In the size database of Fig. 17, size information of the plant species is stored for each plant species.

In Fig. 17, in a case where the plant species is planted on the ground surface of the first-stage block, when the occupied space occupied by the plant species is represented by a block, information indicating a configuration of the block representing the occupied space is adopted as the size information of the plant species.

For example, for parsley, size information is stored, the size information indicating that the block number in the x axis direction is 1, that the block number in the y axis direction is 1, that presence or absence of a block at a z1 layer is presence, and that presence or absence of a block at z2 and subsequent layers is absence, that is, the size information indicating a size of the occupied space that is occupied by parsley and includes a block which has a size corresponding to one block in the x axis direction, has a size corresponding to one block in the y axis direction, and has a z coordinate of z1 (a z1-layer block). The block at a z#i layer means an i-th block from the ground surface toward the sky.

Furthermore, for example, for garland chrysanthemum, size information is stored, the size information indicating that the block number in the x axis direction is 1, that the block number in the y axis direction is 1, that presence or absence of a block at a z1 layer is absence, that presence or absence of a block at a z2 layer is presence, and that presence or absence of a block at z3 and subsequent layers is absence, that is, the size information indicating a size of the occupied space that is occupied by garland chrysanthemum and includes a block which has a size corresponding to one block in the x axis direction, has a size corresponding to one block in the y axis direction, and has a z coordinate of z2 (a z2-layer block).

Moreover, for example, for Angelica keiskei, size information is stored, the size information indicating that the block number in the x axis direction is 2, that the block number in the y axis direction is 2, that presence or absence of a block at a z1 layer is presence, that presence or absence of a block at a z2 layer is presence, and that presence or absence of a block at z3 and subsequent layers is absence, that is, the size information indicating a size of the occupied space that is occupied by Angelica keiskei and includes blocks which have a size corresponding to two blocks in the x axis direction, have a size corresponding to two blocks in the y axis direction, and have z coordinates of z1 and z2 (a z1-layer block and a z2-layer block).

In a case where there is an empty block in the occupancy permission space in which the block (included in the occupied space) indicated by the size information of the candidate plant species can be arranged, the planting planning unit 52 can arrange the candidate plant species in the occupancy permission space.

For example, in a case where there are 1 × 1 × 1 empty blocks in the first-stage blocks (blocks having the z coordinate of z1) of the occupancy permission space, parsley can be arranged in the 1 × 1 × 1 empty blocks.

Furthermore, for example, in a case where there are 1 × 1 × 1 empty blocks in the second-stage blocks (blocks having the z coordinate of z2) of the occupancy permission space, garland chrysanthemum can be arranged in the 1 × 1 × 1 empty blocks.

Moreover, for example, in a case where there are 2 × 2 × 2 empty blocks from the first-stage blocks (blocks having the z coordinate of z1) to the second-stage blocks (blocks having the z coordinate of z2) of the occupancy permission space, Angelica keiskei can be arranged in the 2 × 2 × 2 empty blocks.

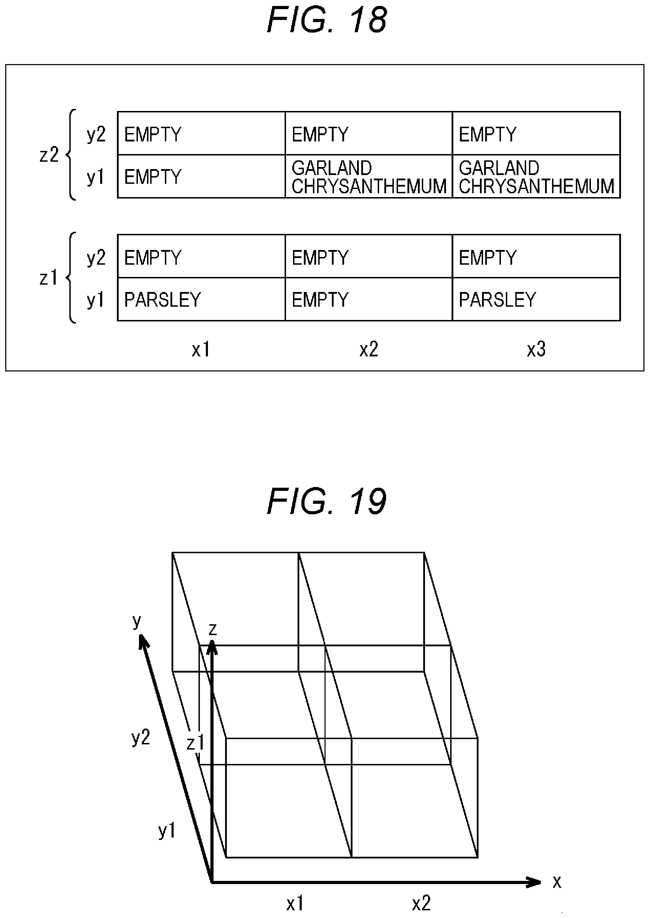

Fig. 18 is a diagram illustrating an example of a planting plan map as planting plan information indicating a planting plan created using the space information of the occupancy permission space.

In a case where a planting plan is created using the space information of the occupancy permission space, the planting plan may include (information indicating) a planting position at which the target plant species is planted, in addition to (information indicating) the target plant species and the planting time.

Fig. 18 illustrates an example of the planting position in the planting plan.

That is, in Fig. 18, the planting positions in a case where parsley and garland chrysanthemum are arranged as the target plant species in the occupancy permission space as illustrated in Fig. 16 are expressed by positions of the blocks occupied by the target plant species.

In Fig. 18, parsley is arranged in each of the blocks (x1, y1, z1) and (x3, y1, z1), and garland chrysanthemum is arranged in each of the blocks (x2, y1, z2) and (x3, y1, z2).

The planting position of the parsley arranged in each of the blocks (x1, y1, z1) and (x3, y1, z1) is the ground surface of each of the blocks (x1, y1, z1) and (x3, y1, z1).

The planting position of the garland chrysanthemum arranged in each of the blocks (x2, y1, z2) and (x3, y1, z2) is the ground surface of each of the blocks (x2, y1, z1) and (x3, y1, z1).

Fig. 19 is a diagram illustrating an example of the occupancy permission space.

In Fig. 19, the occupancy permission space includes 2 × 2 × 1 blocks.

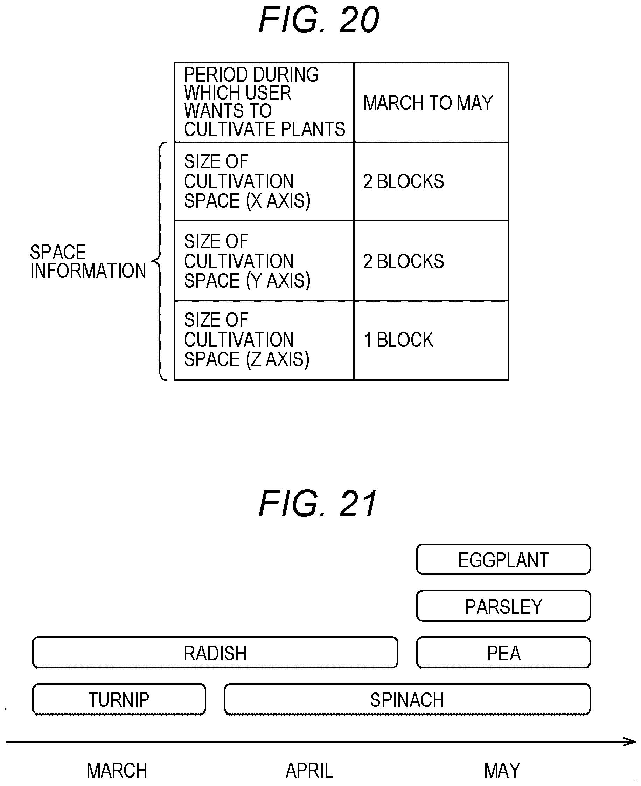

Fig. 20 is a diagram illustrating an example of the limit information transmitted by the terminal 11.

In Fig. 20, the limit information includes the cultivation period and the space information.

In Fig. 20, the cultivation period (desired period for cultivation) is a period from March to May.

Furthermore, in Fig. 20, the space information indicates the occupancy permission space (cultivation space where cultivation is performed) including 2 × 2 × 1 blocks illustrated in Fig. 19.

In the server 12, in a case where the limit information of Fig. 20 is received, the planting planning unit 52 selects, as the candidate plant species, a plant species of which the growth period is within a period from March to May that is the cultivation period included in the limit information, on a basis of the growth period stored in the growth period database.

For example, in a case where one month is set as a division period, March, April, and May included in a period from March to May which is a cultivation period are respectively set as division periods, and for each division period, the plant species of which a part or the whole of the growth period corresponds to the division period is selected as the candidate plant species.

Fig. 21 is a diagram illustrating an example of plant species of which the growth period is within a period from March to May that is a cultivation period, the plant species being selected as the candidate plant species on a basis of the growth period stored in the growth period database.

In Fig. 21, turnip of which (a part or the whole of) the growth period is March, spinach of which the growth period is April and May, and radish of which the growth period is March and April are selected as the candidate plant species.

Moreover, in Fig. 21, eggplant, parsley, and pea of which the growth period is May are selected as candidate plant species.

For each division period in the cultivation period from March to May, the planting planning unit 52 arranges the candidate plant species of which the division period corresponds to the growth period in the occupancy permission space including 2 × 2 × 1 blocks represented by the space information included in the limit information. Therefore, the planting planning unit 52 creates a planting plan for the cultivation period from March to May.

The arrangement of the candidate plant species in the occupancy permission space for the division period is performed such that, for example, the space filling rate × the diversity rate is further enhanced on a basis of the biological diversity index information stored in the biological diversity database and the size information stored in the size database as described above.

The arrangement of the candidate plant species in the occupancy permission space for further enhancing the space filling rate × the diversity rate is performed by, for example, mathematical programming or a search algorithm.

In order to further enhance the space filling rate × the diversity rate, the candidate plant species arranged in the occupancy permission space becomes the target plant species to be planted in the planting plan (is selected as the target plant species).

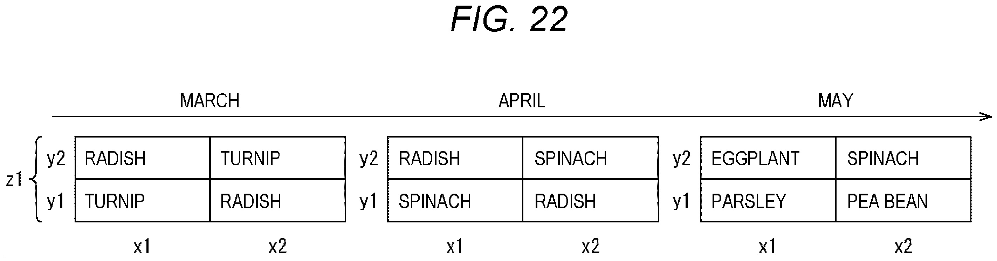

Fig. 22 is a diagram illustrating an example of the planting plan map as the planting plan information indicating the planting plan created for the occupancy permission space including 2 × 2 × 1 blocks as described above.

Note that, here, the size information of turnip, spinach, radish, eggplant, parsley, and pea (bean) as the candidate plant species indicates, for example, a size of the occupied space that is occupied by the candidate plant species and includes a block which has a size corresponding to one block in the x axis direction, has a size corresponding to one block in the y axis direction, and has a z coordinate of z1 (z1-layer block).

Furthermore, as the biological diversity used for calculating the diversity rate, for example, the number of genera (the number of genera) specified by the phylogenetic classification as the biological diversity index information is adopted.

In Fig. 22, for March as the first division period of the cultivation period, turnip and radish of which the growth period is March are arranged in the occupancy permission space.

In order to enhance the space filling rate, the turnip and the radish are respectively arranged in two blocks. That is, turnip is arranged in the blocks (x1, y1, z1) and (x2, y2, z1), and radish is arranged in the blocks (x1, y2, z1) and (x2, y1, z1).

For April as the next division period, turnip is not in the growth period, and turnip and spinach are in the growth period. Therefore, spinach is arranged instead of turnip in the two blocks (x1, y1, z1) and (x2, y2, z1) in which turnip that is no longer in the growth period is arranged.

The radish of which the growth period is April remains the arrangement state in the blocks (x1, y2, z1) and (x2, y1, z1).

For May as the last division period, radish is not in the growth period, and spinach, eggplant, parsley, and pea are in the growth period. Therefore, any one of spinach, eggplant, parsley, and pea is arranged instead of the radish in the two blocks (x1, y2, z1) and (x2, y1, z1) in which radish that is no longer in the growth period is arranged.

In Fig. 22, in order to enhance the diversity rate, for example, eggplant is arranged in the block (x1, y2, z1), and pea bean is arranged in the block (x2, y1, z1).

Moreover, in Fig. 22, in order to enhance the diversity rate, parsley is arranged instead of the spinach, for example, in the block (x1, y1, z1) that is one of the two blocks (x1, y1, z1) and (x2, y2, z1) in which the spinach that is in the growth period is arranged.

As described above, by arranging the candidate plant species in the occupancy permission space such that the space filling rate and the diversity rate as quantitative indices are enhanced on a basis of the cultivation period, the space information, the growth period, the biological diversity index information, and the size information, in a case of creating a planting plan, it is possible to create a planting plan that realizes complex spatial arrangement and complex temporal arrangement of the plant species for further enhancing a degree of filling of plants and the biological diversity in the occupancy permission space, that is, a planting plan that enhances the biological diversity and efficiently uses a farmland, on a basis of the growth period of each plant species and the size of the occupancy permission space.

According to such a planting plan, the user can easily recognize a plant species which enhances both the biological diversity and the productivity and the spatial and temporal arrangements of the plant species under temporal and spatial constraints (constraints due to the cultivation period and the spatial information). That is, the user can easily recognize the target plant species, which should be planted in order to further enhance the biological diversity and efficiently use the farmland in the cultivation period (enhance the space filling rate), and the planting position and (the division period as) the planting time of the target plant species.

Then, the user performs planting of plants according to the planting plan. Therefore, the user can construct an extended ecosystem without recognizing growth periods, sizes, and the like of several tens to several hundreds of plant species and creating a complex vegetation strategy.

### <Case where Cultivation Period, Space Information, and Information indicating Plant Species that can be planted are adopted as Limit Information>

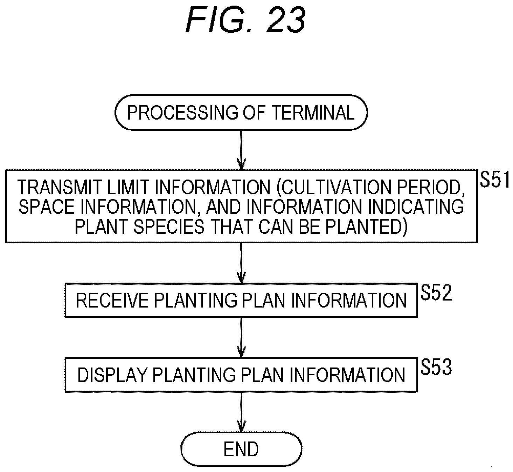

Fig. 23 is a flowchart illustrating an example of processing of the terminal 11 in a case where the cultivation period, the space information, and the information indicating the plant species that can be planted are adopted as the limit information.

As described in Fig. 3, the plant species that can be planted is a plant species that can be a target of planting. For example, a plant species that can be obtained by the user, a plant species that the user desires to plant, and the like can be adopted as the plant species that can be planted.

In a case where the information indicating the plant species that can be planted is adopted as the limit information, the plant species to be planted can be limited to only the plant species that can be planted, that is, only the plant species that can be obtained by the user and the plant species that the user desires to plant.

In the terminal 11, in step S51, the transmission unit 32 waits for the cultivation period, the space information, and the information indicating the plant species that can be planted to be input by an operation of the user I/F 31 by the user, and transmits the limit information. Then, the processing proceeds to step S52. That is, the transmission unit 32 transmits the cultivation period, the space information, and the information indicating the plant species that can be planted as the limit information.

Thereafter, in step S52 and step S53, the terminal 11 performs pieces of processing that are similar to pieces of processing of step S12 and step S13 in Fig. 7.

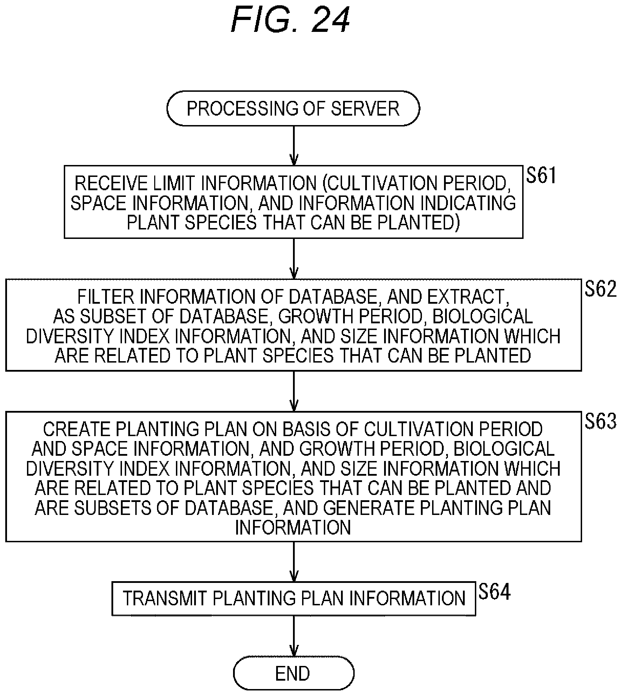

Fig. 24 is a flowchart illustrating an example of processing of the server 12 in a case where the cultivation period, the space information, and the information indicating the plant species that can be planted are adopted as the limit information.

In the server 12, in step S61, the planting planning unit 52 waits for the limit information to be transmitted from the terminal 11, receives the limit information, and stores the limit information in a storage unit (not illustrated). Then, the processing proceeds to step S62.

Thereafter, in step S62 and step S63, the planting planning unit 52 creates a planting plan on a basis of the cultivation period, the space information, and the information indicating the plant species that can be planted as the limit information from the terminal 11, and the growth period stored in the growth period database, the biological diversity index information stored in the biological diversity database, and the size information stored in the size database.

That is, in step S62, the planting planning unit 52 filters pieces of information of the growth period database, the biological diversity database, and the size database on a basis of the information indicating the plant species that can be planted. Then, the processing proceeds to step S63.

In the filtering in step S62, the growth period, the biological diversity index information, and the size information which are related to the plant species that can be planted are extracted as a subset of each database from pieces of information of the growth period database, the biological diversity database, and the size database.

In step S63, the planting planning unit 52 creates a planting plan on a basis of the cultivation period and the space information as the limit information from the terminal 11, and the growth period, the biological diversity index information, and the size information which are related to the plant species that can be planted as a subset of the databases.

Then, the planting planning unit 52 generates planting plan information indicating the planting plan, and the processing proceeds from step S63 to step S64.

In step S64, the planting planning unit 52 transmits the planting plan information to the terminal 11, and the processing is ended.

As described above, in a case of creating a planting plan on a basis of the plant species that can be planted, it is possible to create a planting plan in which the target plant species (the plant species to be planted) are limited to, for example, only the plant species that can be planted such as a plant species that can be obtained by the user, a plant species that the user desires to plant, and the like.

Note that the planting plan can be created using, as the limit information, the cultivation period and the information indicating the plant species that can be planted without using the space information.

In this case, the size information is unnecessary in a case of creating the planting plan, but the planting position is not included in the planting plan.

### <Another Example of Biological Diversity Database>

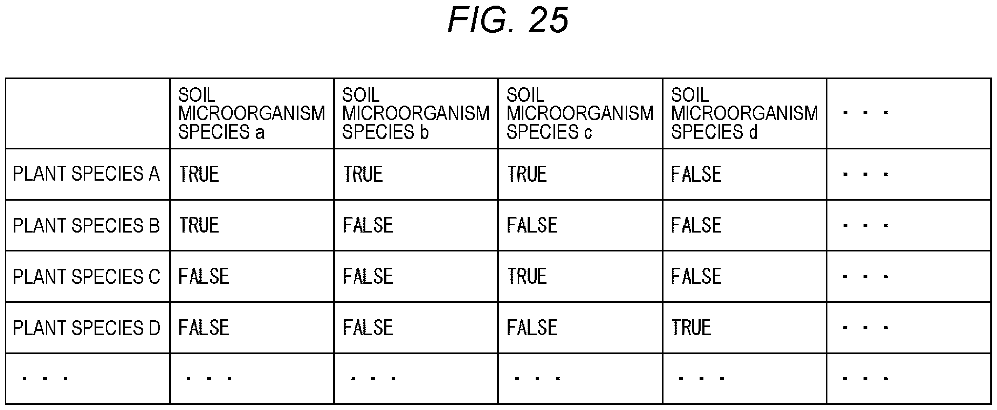

Fig. 25 is a diagram illustrating another example of the biological diversity database.

The biological diversity database stores biological diversity index information.

As the biological diversity index information, in addition to the information indicating the phylogenetic classification as illustrated in Fig. 10, as described in Fig. 5, information such as microbiota in a co-occurrence relationship with the plant species, metabolites appearing in the plant species, and the like can be adopted.

Fig. 25 illustrates an example of information of microorganism species in a co-occurrence relationship with each plant species as the biological diversity index information.

The biological diversity index information of Fig. 25 includes, for each plant species, co-occurrence relationship information indicating whether the plant species is in a co-occurrence relationship with each soil microorganism species (TRUE) or whether the plant species is not in a co-occurrence relationship with each soil microorganism species (FALSE), as information of the microorganism species in a co-occurrence relationship with each plant species.

The planting planning unit 52 calculates, as an index indicating a co-occurrence relationship, dissimilarity (or similarity) between plant species by using information of microorganism species in a co-occurrence relationship with each plant species as the biological diversity index information of Fig. 25.

The dissimilarity between two plant species A and B as an index indicating the co-occurrence relationship is calculated, for example, as follows.

That is, it is assumed that N pieces of co-occurrence relationship information between each plant species and the microorganism species are indicated in the information of the microorganism species in a co-occurrence relationship with each plant species in Fig. 25.

The planting planning unit 52 assigns, for the N pieces of co-occurrence relationship information of the plant species A and B, 1 to the co-occurrence relationship information indicating that there is a co-occurrence relationship, and assigns 0 to the co-occurrence relationship information indicating that there is no co-occurrence relationship.

The planting planning unit 52 respectively generates vectors including, as elements, N pieces of co-occurrence relationship information of the plant species A and B, as feature vectors of the plant species A and B.

Then, the planting planning unit 52 calculates, as dissimilarity between the plant species A and B, for example, a binary distance between the feature vectors of the plant species A and B.

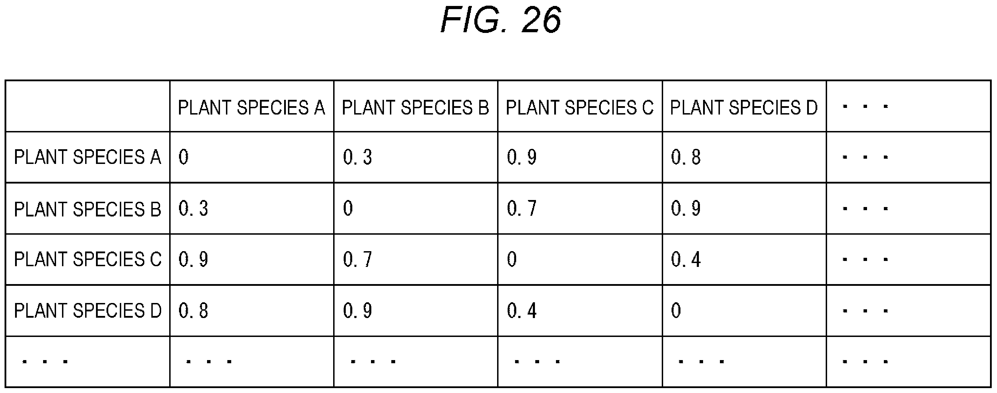

Fig. 26 is a diagram illustrating an example of dissimilarity between plant species.

In Fig. 26, dissimilarity between plant species is indicated by a matrix including dissimilarity as an element.

The planting planning unit 52 groups each plant species on a basis of the dissimilarity between the plant species.

The grouping of the plant species based on the dissimilarity between the plant species can be performed by, for example, hierarchical clustering or the like.

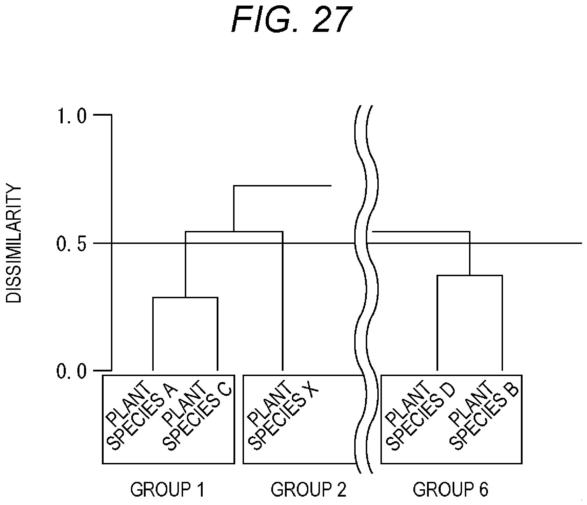

Fig. 27 is a diagram illustrating grouping of plant species by hierarchical clustering.

In hierarchical clustering, the plant species are clustered in ascending order of dissimilarity.

That is, each of the plant species is regarded as one group (cluster), and groups having minimum dissimilarity between the groups are integrated into one group.

Then, for the groups existing after the integration, groups having minimum dissimilarity between the groups are repeatedly integrated into one group.

As the dissimilarity between two groups, for example, an average value or the like of the dissimilarity between each of the plant species belonging to one group and each of the plant species belonging to another group can be adopted.

Fig. 27 illustrates a dendrogram obtained by integrating the groups until one group is obtained as described above.

The dendrogram expresses the integration of the groups in a form of a tree diagram. In the dendrogram, a fact that the groups are connected by a line (foot) represents the integration of the groups. Furthermore, a length of the line connecting the groups corresponds to the dissimilarity between the groups.

The planting planning unit 52 divides the dendrogram by a predetermined dissimilarity threshold value, and obtains groups existing at a time of the division as a result of grouping of the plant species.

In Fig. 27, the dendrogram is divided by a dissimilarity threshold value of 0.5, and six groups of a group 1 to which the plant species A and C belong, a group 2 to which the plant species X and others belong, · · ·, and a group 6 to which the plant species B and D belong are obtained.

In the present embodiment, plant species belonging to the same group are plant species in which soil microorganism species in a co-occurrence relationship are similar. A fact that the soil microorganism species are similar to each other means that, for example, analysis results (read numbers and the like) of metagenomic analysis of the soil microorganism species are similar to each other.

After grouping of the plant species, the planting planning unit 52 generates a group list in which information of the group of the plant species is associated with each plant species.

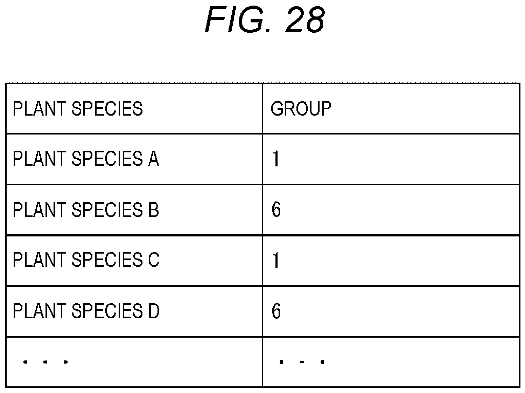

Fig. 28 is a diagram illustrating an example of a group list.

In the group list, each plant species is associated with information of the group of the plant species.

Note that, as the biological diversity index information, instead of the information of the microorganism species in a co-occurrence relationship with each plant species in Fig. 25, the group list of Fig. 28 which is generated using the information of the microorganism species in a co-occurrence relationship with each plant species can be adopted.

Furthermore, the grouping of the plant species can be performed on all the plant species included in the information of the microorganism species in a co-occurrence relationship with each plant species in Fig. 25. In a case where the limit information includes the plant species that can be planted, the information of the microorganism species in a co-occurrence relationship with each plant species in Fig. 25 can be filtered on a basis of the information indicating the plant species that can be planted, and grouping can be performed on only information of a subset obtained as a result of the filtering, that is, the information indicating the plant species that can be planted.

In a case where the information of the microorganism species in a co-occurrence relationship with each plant species in Fig. 25 is used as the biological diversity index information, the diversity rate is calculated by using, for example, the number of groups of plant species specified by the group list, which is generated from the information of the microorganism species, as the biological diversity.

As the biological diversity index information, only one of the information of phylogenetic classifications of plants and the information of the microorganism species in a co-occurrence relationship with each plant species in Fig. 25 can be adopted. In addition, as the biological diversity index information, both the information of phylogenetic classifications of plants and the information of the microorganism species in a co-occurrence relationship with each plant species in Fig. 25 can be adopted.

In a case where both the information of phylogenetic classifications of plants and the information of the microorganism species in a co-occurrence relationship with each plant species in Fig. 25 are adopted as the biological diversity index information, both the number of genera or families of plants in the phylogenetic classification and the number of groups of plant species are used as the biological diversity.

In this case, a predetermined operation value of the diversity rate calculated using the number of genera or families of plants and the diversity rate calculated using the number of groups of plant species, for example, a multiplication value or the like can be used as a final diversity rate.

The group list can be generated as the biological diversity index information by using the information of the microorganism species in a co-occurrence relationship with each plant species in Fig. 25. In addition, as the biological diversity index information, the group list can be generated by using other information that is an index of functional diversity of plants. For example, the group list can be generated by using information of metabolites appearing in the plant species as information that is an index of functional diversity of plants.

In a case where the group list is generated by using the information of the metabolites appearing in the plant species, the plant species are grouped into plant species in which the appearing metabolites are similar.

By adopting, as the biological diversity index information, a plurality of pieces of information such as information of phylogenetic classifications of plants, information as an index of the functional diversity of plants, and the like, it is possible to create a planting plan for improving the biological diversity from multiple viewpoints.

### <Case where Cultivation Period, Space Information, and Planting Point are adopted as Limit Information>

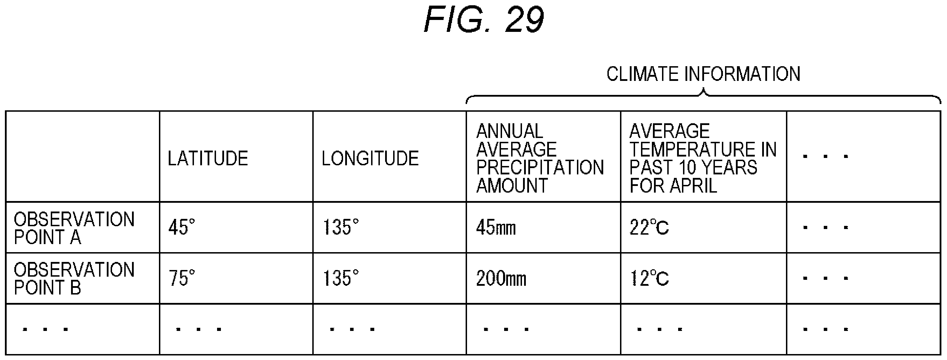

Fig. 29 is a diagram illustrating an example of the climate database included in the database 51 in a case where the limit information includes information indicating a planting point.

In a case where the limit information includes information indicating a planting point, that is, information indicating a place of a farmland where the plants are to be cultivated, the database 51 includes the climate database.

The climate database stores latitude and longitude as information indicating a position of each observation point and climate information. The climate information is, for example, information indicating (characteristics of) a climate of the observation point, such as an average precipitation amount, a maximum precipitation amount, and a minimum precipitation amount in a year, an average temperature in the past 10 years for each month, and the like.

As the climate information, in addition to the numerical value such as the average precipitation amount described above, for example, information indicating a climate zone such as a subtropical zone or information indicating a climate category such as a climatic section obtained by further finely dividing the climate zone can be adopted.

Here, the climate means weather conditions over a long period of time, such as one month or one year. The weather means all natural phenomena occurring in the atmosphere.

Therefore, since the climate information can be obtained from the weather information, a database in which the weather information is stored can be adopted as the climate database instead of the climate information.

In the server 12, in a case where a database in which weather information is stored is adopted as the climate database, for example, the climate information is calculated by using weather information such as a precipitation amount or a temperature in a certain period such as one year.

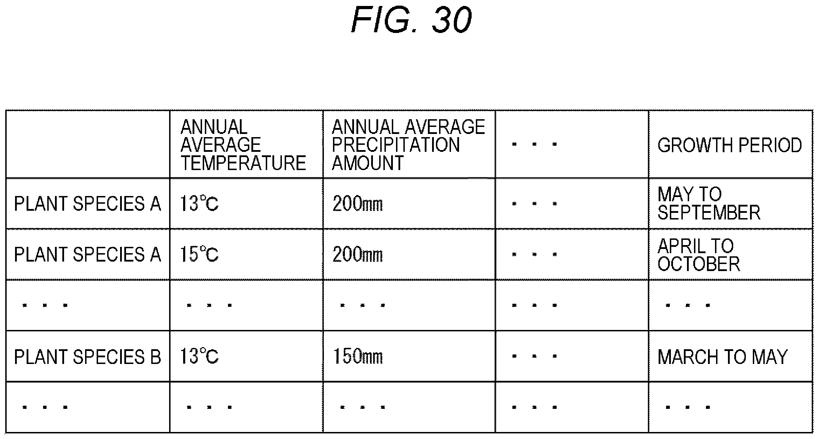

Fig. 30 is a diagram illustrating another example of the growth period database.

Fig. 30 illustrates an example of the growth period database in a case where the database 51 includes the climate database.

The growth period database of Fig. 30 stores, for each plant species, the climate information such as an annual average temperature and an annual average precipitation amount of a region where the plant species grows and the growing period of the plant species in the region.

Even the same plant species may have different growth periods in regions with different climates.

In a case where the limit information includes information indicating a planting point, by using the growth period database of Fig. 30, a planting plan can be created on a basis of a growth period in a climate of the planting point (or a climate close to a climate of the planting point).

Therefore, a planting plan suitable for the climate of the planting point can be created.

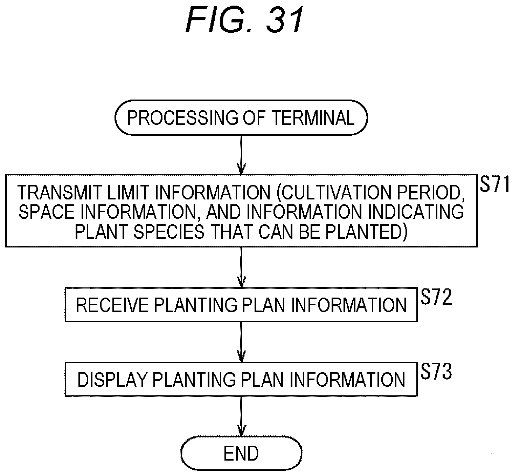

Fig. 31 is a flowchart illustrating an example of processing of the terminal 11 in a case where the cultivation period, the space information, and the information indicating the planting point are adopted as the limit information.

In the terminal 11, in step S71, the transmission unit 32 waits for the cultivation period, the space information, and the information indicating the planting point to be input by an operation of the user I/F 31 by the user, and transmits the limit information. Then, the processing proceeds to step S72. That is, the transmission unit 32 transmits the cultivation period, the space information, and the information indicating the planting point as the limit information.

Thereafter, in step S72 and step S73, the terminal 11 performs pieces of processing that are similar to pieces of processing of step S12 and step S13 in Fig. 7.

As the information indicating the planting point, for example, a place name such as a name of a municipality of the planting point, and latitude, longitude, and the like of the planting point can be adopted.

In a case where latitude and longitude are adopted as the information indicating the planting point, the user can input, as the information indicating the planting point, latitude and longitude as the position information of the terminal 11 that is measured by the positioning unit 21 by performing a predetermined operation of the terminal 11 at the planting point.

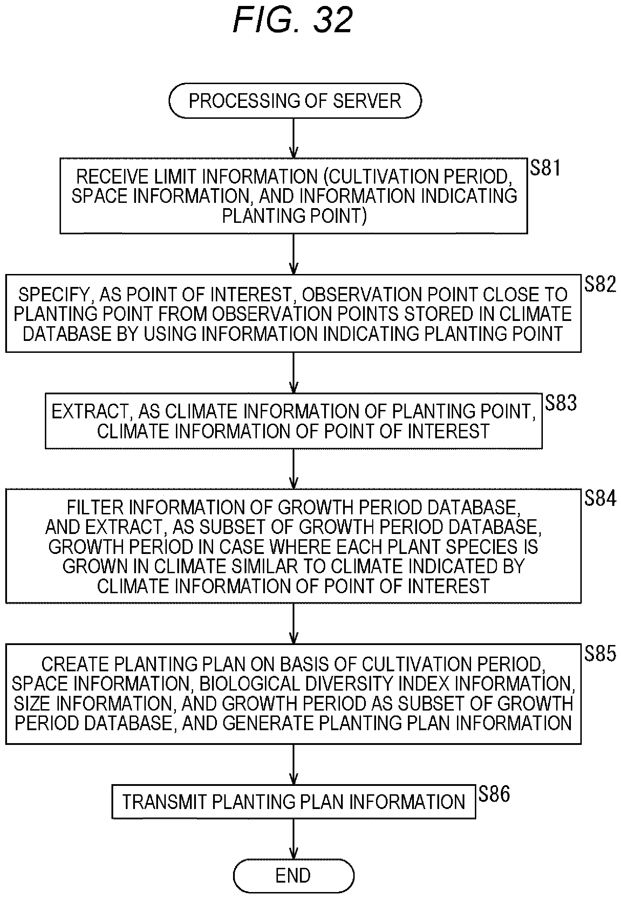

Fig. 32 is a flowchart illustrating an example of processing of the server 12 in a case where the cultivation period, the space information, and the information indicating the planting point are adopted as the limit information.

In the server 12, in step S81, the planting planning unit 52 waits for the limit information to be transmitted from the terminal 11, receives the limit information, and stores the limit information in a storage unit (not illustrated). Then, the processing proceeds to step S82.

Thereafter, in step S82 to step S85, the planting planning unit 52 creates a planting plan on a basis of the cultivation period, the space information, and the information indicating the planting point as the limit information from the terminal 11, and the growth period stored in the growth period database, the biological diversity index information stored in the biological diversity database, and the size information stored in the size database.

That is, in step S82, the planting planning unit 52 specifies, as a point of interest, an observation point close to the planting point from the observation points stored in the climate database of Fig. 29 by using the information indicating the planting point. Then, the processing proceeds to step S83.

For example, the planting planning unit 52 recognizes the latitude and longitude of the planting point from the information indicating the planting point.

Moreover, the planting planning unit 52 calculates a distance between the planting point and each observation point stored in the climate database of Fig. 29 by using the latitude and the longitude of the planting point and the latitude and the longitude of the observation point stored in the climate database of Fig. 29. As the distance between the planting point and each observation point, for example, a Euclidean distance on a Mercator projection map, or the like can be adopted.

The planting planning unit 52 specifies, as a point of interest, an observation point having a shortest distance to the planting point from the observation points stored in the climate database of Fig. 29.

In step S83, the planting planning unit 52 extracts, as the climate information of the planting point, the climate information of the point of interest from the climate database of Fig. 29. Then, the processing proceeds to step S84.

Thereafter, in step S84 and step S85, the planting planning unit 52 creates a planting plan on a basis of the cultivation period, the space information, the climate information of the planting point, the biological diversity index information, the size information, and the growth period.

That is, in step S84, the planting planning unit 52 filters the information of the growth period database of Fig. 30 on a basis of the climate information of the planting point. Then, the processing proceeds to step S85.

In the filtering in step S84, a growth period in a case where each plant species is grown in a climate similar to the climate indicated by the climate information of the point of interest is extracted as a subset of the growth period database from the information of the growth period database of Fig. 30.

In the filtering in step S84, the extraction of the growth period as a subset of the growth period database is performed by detecting climate information similar to the climate information of the point of interest from the climate information such as the annual average temperature in the growth period database.

A similarity between the climate information of the growth period database and the climate information of the point of interest is evaluated by, for example, a correlation coefficient between the climate information of the growth period database and the climate information of the point of interest. For example, it is determined that the climate information of the growth period database for which a correlation coefficient equal to or larger than a threshold value is obtained is similar to the climate information of the point of interest.

The correlation coefficient between the climate information of the growth period database and the climate information of the point of interest can be calculated, for example, by normalizing a value of each element of the weather information such as the average precipitation amount and using a normalized value obtained as a result of the normalization.

The normalized value of an element X of the weather information can be calculated, for example, by subtracting an average value of the element X stored in the growth period database from a value of the element X and dividing a subtracted value obtained as a result of the subtraction by a standard deviation of the element X stored in the growth period database.

The correlation coefficient between the climate information of the growth period database and the climate information of the point of interest can be calculated by using the normalized value of each element of the climate information of the growth period database and the normalized value of each element of the climate information of the point of interest, the normalized values being calculated as described above.

In step S85, the planting planning unit 52 creates a planting plan on a basis of the cultivation period, the space information, the biological diversity index information, the size information, and the growth period as a subset of the growth period database.

Then, the planting planning unit 52 generates planting plan information indicating the planting plan, and the processing proceeds from step S85 to step S86.

In step S86, the planting planning unit 52 transmits the planting plan information to the terminal 11, and the processing is ended.

Note that the planting plan can be created using, as the limit information, the cultivation period and the information indicating the planting point without using the space information. In this case, the size information is unnecessary in a case of creating the planting plan, but the planting position is not included in the planting plan.

Furthermore, in a case of creating a planting plan, as the limit information, the cultivation period, the space information, the plant species that can be planted, and the information indicating the planting point can be used. Furthermore, the cultivation period, the plant species that can be planted, and the information indicating the planting point can be used as the limit information without using the space information.

Moreover, in the terminal 11, the user can acquire the climate information of the planting point, and use the climate information of the planting point as the limit information instead of the information indicating the planting point. In this case, in the server 12, the processing of specifying the point of interest in step S82 of Fig. 32 and the processing of extracting the climate information of the planting point in step S83 are unnecessary.

### <Planting Plan GUI>

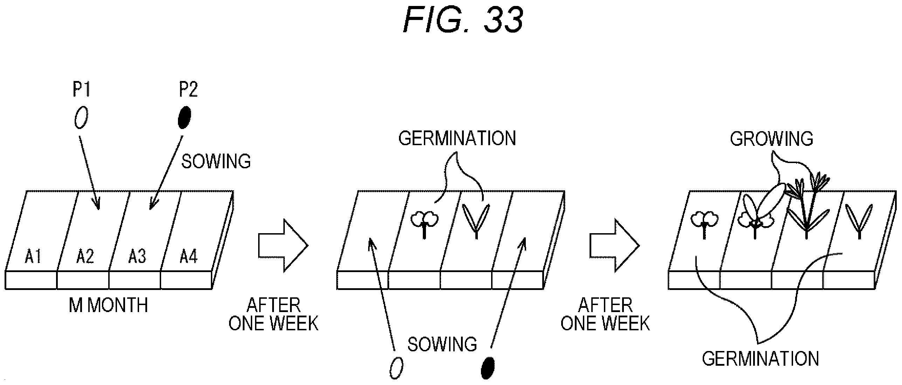

Fig. 33 is a diagram illustrating an example of a planting plan GUI as the planting plan information.

In the planting plan GUI, the planting plan is represented in time series by images such as 3D models and illustrations.

Fig. 33 illustrates that, in an M month in which plant species P1 and P2 are in a growth period, a seed of the plant species P1 is planted (sown) in an area A2 of a farmland as a planting position and a seed of the plant species P2 is planted in an area A3 of the farmland.

Moreover, Fig. 33 illustrates that, after one week from the planting in the areas A2 and A3, a seed of the plant species P1 is planted in an area A1, a seed of the plant species P2 is planted in an area A4, and the plant species P1 in the area A2 and the plant species P2 in the area A3 germinate.

Further, Fig. 33 illustrates that, after one week from the planting in the areas A1 and A4, the plant species P1 in the area A1 and the plant species P2 in the area A4 germinate, and the plant species P1 in the area A2 and the plant species P2 in the area A3 are in a certain growth state.

In addition to events such as sowing (seeding) and germination, the planting plan information can further include a navigation message that navigates various events including work which should be performed by the user, such as planting (introducing) of seedlings and reaping of plants such as harvesting.

In the planting planning unit 52, a timing of germination of each plant species, a timing of a certain growth state, a timing of reaping such as harvesting, and timings of other various events are estimated on a basis of the timing of sowing or seedling introduction.

The timing of sowing or seedling introduction of the plant species can be set to a predetermined timing within a period that is a planting time of the plant species in the planting plan, for example, a start timing of the planting time or a timing specified by the user.

Here, removing a part or all of a planted plant is referred to as reaping (of a plant).

The reaping includes partial reaping of removing a part of the plant and total reaping of removing all (the entire) of the plant.

The total reaping means removing the entire plant from a place where the plant is planted, for example, by uprooting the plant.

For example, harvesting or the like of all radish planted in a certain area corresponds to total reaping.

The partial reaping means removing another part of the plant while leaving a part of the plant at a place where the plant is planted.

For example, removing only leaves on an outer side of a cabbage and leaving the other parts as they are, or harvesting kernels of a corn plant and leaving the other parts of the corn plant as they are correspond to the partial reaping. Moreover, for example, completely removing some plant individuals among a plurality of plant individuals of the same species that are planted in a certain area and leaving the other plant individuals as they are corresponds to the partial reaping.

In a case of navigating introduction of seedlings, the database 51 includes a germination time database. In a case of navigating reaping of plants, the database 51 includes a harvest database.

As described in Fig. 5, the germination time database stores, for each plant species, a germination time for which the species germinates, and the harvest database stores, for each plant species, a required harvest period from sowing or seedling introduction until the plant species is in a state suitable for harvest.

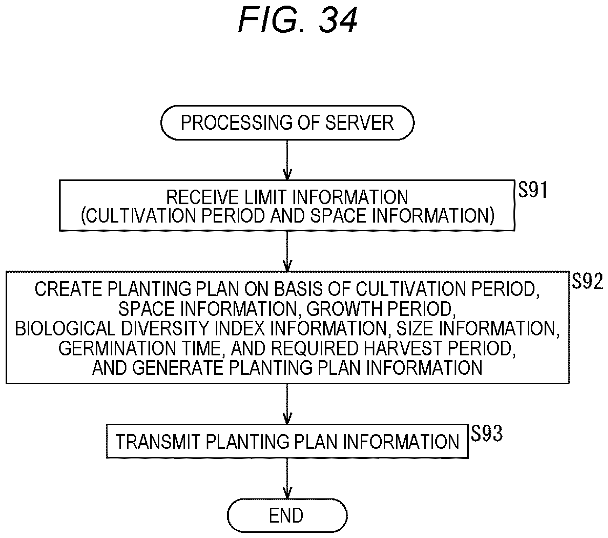

Fig. 34 is a flowchart illustrating an example of processing of the server 12 in a case where the database 51 includes the germination time database and the harvest database.

Note that, here, for example, the cultivation period and the space information are adopted as the limit information.

In the server 12, in step S91, the planting planning unit 52 waits for the limit information to be transmitted from the terminal 11, receives the limit information, and stores the limit information in a storage unit (not illustrated). Then, the processing proceeds to step S92.

In step S92, the planting planning unit 52 creates a planting plan on a basis of the cultivation period and the space information as the limit information from the terminal 11, the growth period stored in the growth period database, the biological diversity index information stored in the biological diversity database, the size information stored in the size database, the germination time stored in the germination time database, and the required harvest period stored in the harvest database. Moreover, the planting planning unit 52 generates planting plan information indicating the planting plan, and the processing proceeds from step S92 to step S93.

In step S93, the planting planning unit 52 transmits the planting plan information to the terminal 11, and the processing is ended.

As described above, in a case where the planting plan is created on a basis of the germination time, the planting plan GUI as the planting plan information indicating the planting plan can include, for example, a navigation message for sowing or a navigation message for seedling introduction as a navigation message for planting of a plant species. The navigation message for sowing and the navigation message for seedling introduction can be displayed, for example, by allowing the user to designate a timing within the cultivation period and performing displaying according to the timing designated by the user or the current timing.

For example, in a case where the timing designated by the user or the current timing is within the planting time of the plant species A in the planting plan and is also within the germination time of the species of the plant species A, the navigation message for sowing can be displayed to urge the user to perform sowing. On the other hand, in a case where the timing designated by the user or the current timing is within the planting time of the plant species A but is not within the germination time of the species of the plant species A, the navigation message for seedling introduction can be displayed to urge the user to introduce seedling.

Furthermore, in a case where the planting plan is created also on a basis of the required harvest period, the planting plan GUI as the planting plan information indicating the planting plan can include, for example, a navigation message for plant reaping such as harvesting.

In this case, for example, when the required harvest period of the plant species A has elapsed from the planting of the plant species A, a navigation message for reaping of the plant species A can be displayed. As the timing of planting the plant species A, for example, a timing designated by the user, a predetermined timing such as a start timing within a period that is the planting time of the plant species A in the planting plan, or the like can be adopted, and a necessary elapsed period can be counted.

For the navigation message for reaping, in a case where the growth period of the plant species A continues even after the elapse of the required harvest period of the plant species A in the planting plan (in a case where it is planned to arrange the plant species A in a place where the plant species A is already planted in the planting plan), a navigation message for partial reaping of the plant species A can be displayed.

On the other hand, in a case where the growth period of the plant species A ends after the elapse of the required harvest period of the plant species A in the planting plan and it is planned to arrange another plant species at the planting position where the plant species A is already planted, a navigation message for total reaping of the plant species A can be displayed.

According to the planting plan GUI, the user can easily recognize a target plant species that is a target of planting, a planting position (area), a timing of work (an event) that should be performed by the user, such as sowing or harvesting, a timing of an event in a plant growth process, such as germination or a certain growth state, and the like.

The planting plan information can include various types of additional information specified from the planting plan.

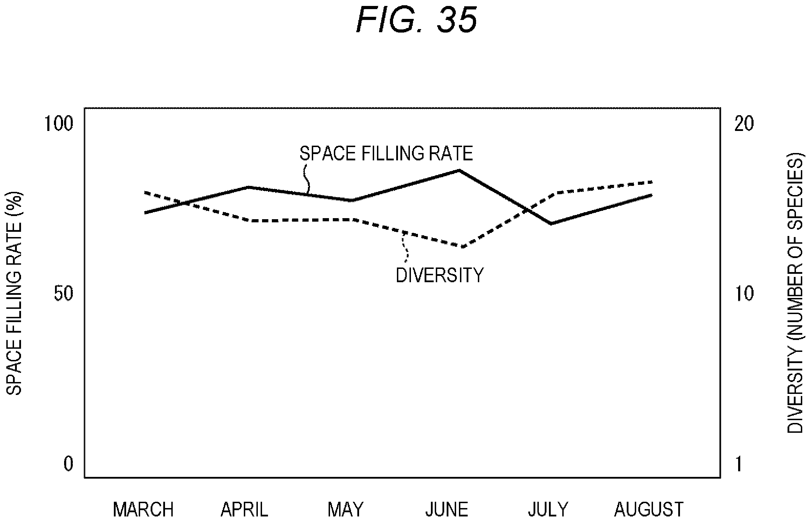

Fig. 35 is a diagram illustrating a first example of additional information.

From the planting plan, the planting planning unit 52 can specify, as the additional information, for example, the space filling rate and the biological diversity for each month as a division section in the cultivation period, and can include the additional information in the planting plan information.

In the terminal 11, the space filling rate and the biological diversity for each month that are included in the planting plan information can be displayed as a line graph or the like as illustrated in Fig. 35.

In Fig. 35, the number of species of plant species is adopted as the biological diversity.

According to the line graph representing the space filling rate and the biological diversity for each month or the like, the user can recognize a time-series transition in the space filling rate and the biological diversity.

Note that, in Fig. 35, both the space filling rate and (information indicating) the biological diversity are adopted as the additional information, but only one of the space filling rate and the biological diversity can be adopted as the additional information.

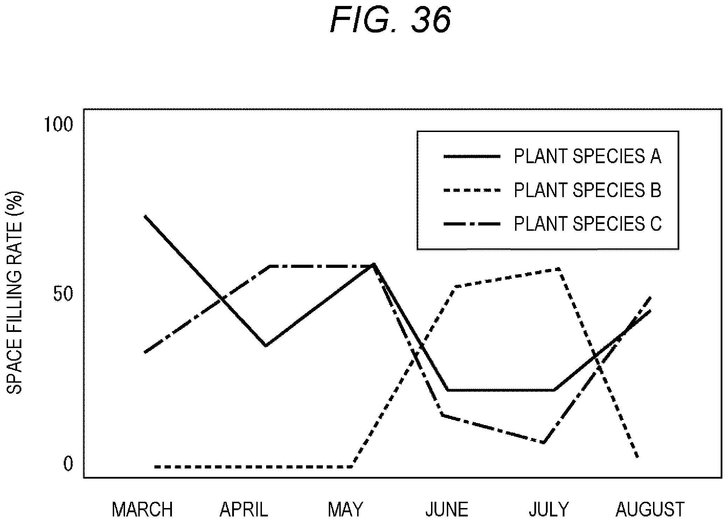

Fig. 36 is a diagram illustrating a second example of additional information.

From the planting plan, the planting planning unit 52 can specify, as the additional information, for all or a part of the target plant species, the space filling rate for each month as a division period in the cultivation period, and can include the additional information in the planting plan information.

In the terminal 11, the space filling rate of each target plant species for each month that is included in the planting plan information can be displayed as a line graph or the like as illustrated in Fig. 36.

In Fig. 36, the space filling rate of each of plant species A, B, and C for each month is displayed, the plant species A, B, and C being target plant species.

According to the line graph representing the space filling rate of each target plant species for each month, the user can recognize a time-series change in the vegetation configuration of the occupancy permission space, that is, a transition in the vegetation configuration.

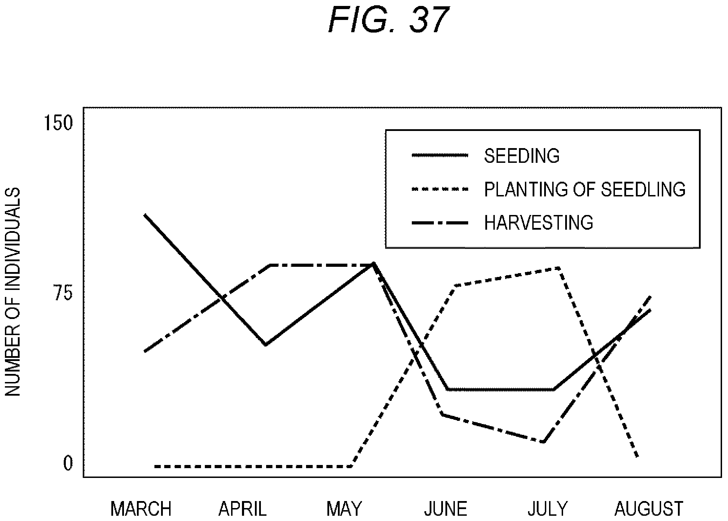

Fig. 37 is a diagram illustrating a third example of additional information.

From the planting plan, the planting planning unit 52 can specify, as the additional information, for all of the target plant species, the number of individuals to be subjected to each of sowing (seeding), introduction of seedlings (planting of seedlings), and harvesting for each month as a division section in the cultivation period, and can include the additional information in the planting plan information. For example, in the planting plan, the planting planning unit 52 sets a predetermined timing (for example, a start timing) within the planting time of each target plant species as a timing of sowing or seedling introduction, and specifies the number of individuals of the target plant species to be subjected to each of sowing, seedling introduction, and harvesting for each month as a division section by predicting a timing of harvesting from the timing of sowing or seedling introduction.

In the terminal 11, the number of individuals to be subjected to each of sowing, seedling introduction, and harvesting (reaping) for each month for all of the target plant species included in the planting plan information can be displayed by a line graph or the like as illustrated in Fig. 37.

According to the line graph representing the number of individuals to be subjected to each of sowing, seedling introduction, and harvesting for each month for all of the target plant species, the user can recognize a workload of work that should be performed in time series.

Note that the number of individuals to be subjected to each of sowing, seedling introduction, and harvesting can be specified for all of the target plant species and can be specified for each of all or a part of the target plant species. In this case, the number of individuals to be subjected to each of sowing, seedling introduction, and harvesting can be displayed, for example, for the target plant species designated by the user.

### <Another Example of Size Database>

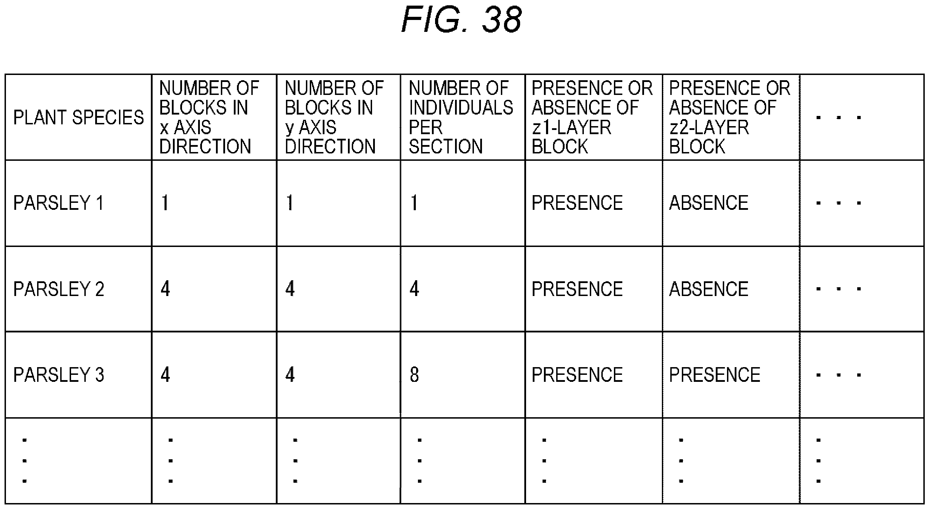

Fig. 38 is a diagram illustrating another example of the size database.

As described with reference to Fig. 17, the size database stores size information of the plant species for each plant species.

The size information of Fig. 38 is different from the size information of Fig. 17 in that (a column of) the number of individuals per section is added.

The section means a bottom surface of the block. The number of individuals per section means the number of plant individuals arranged in one section on the ground surface.

The size database of Fig. 38 stores size information indicating a size of the arranged plants (group) in a case where plants of the same type are arranged at various (a plurality of different) densities or numbers, that is, a size of the occupied space occupied by the arranged plants (group).

In Fig. 38, for example, size information of parsley 1 represents that a size of parsley in a case where one parsley is arranged in one section, that is, a size of the occupied space occupied by parsley, is 1 × 1 × 1 blocks.

Furthermore, for example, size information of parsley 2 represents that a size of the occupied space occupied by parsley in a case where arrangement of four pieces of parsley in one section is performed for 4 × 4 sections in the x direction × the y direction is 4 × 4 × 1 blocks.

Moreover, for example, size information of parsley 3 represents that a size of the occupied space occupied by parsley in a case where arrangement of eight pieces of parsley in one section is performed for 4 × 4 sections in the x direction × the y direction is 4 × 4 × 1 blocks.

In a case of creating a planting plan by using the size information of Fig. 38, a size of a plant community suitable for formation of a niche is searched, and a planting plan in which a plant community having such a size is formed can be created.

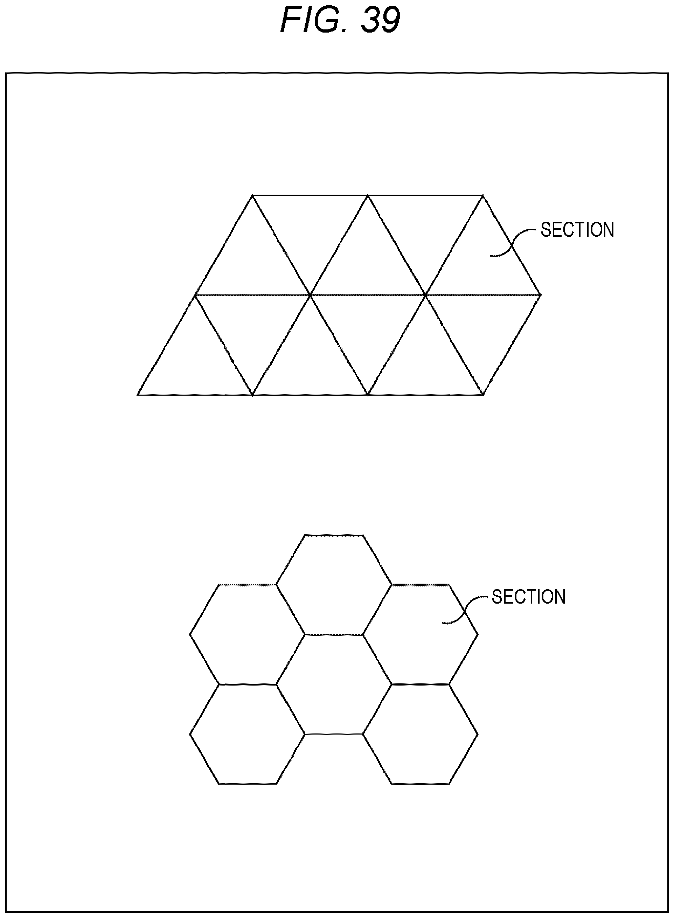

Fig. 39 is a diagram illustrating an example of a section having a shape other than a rectangular shape.

In the above case, the rectangular parallelepiped block is adopted as the block representing the size information, and thus the section of the block is a rectangle (quadrangle). On the other hand, a figure other than the rectangle, for example, a (regular) triangle, a hexagon, or the like can be adopted as the section of the block.

By adopting, as the section, a triangle, a hexagon, or the like other than a rectangle, as illustrated in Fig. 39, as the size of the plant species, that is, as the occupied space occupied by the plant species, it is possible to express (a size of) a space with various variations that are difficult to express with a rectangular section.

In the size information, the size of the plant species, that is, a region (size) in the x direction and the y direction in the occupied space occupied by the plant species, can be expressed by the number of sections and arrangement of sections, or can be expressed only by the number of sections.

Expressing the region in the x direction and the y direction in the occupied space occupied by the plant by the number of sections and arrangement of sections means expressing a region in the x direction and the y direction in the occupied space, for example, as illustrated in Fig. 38, by 1 section in which the x direction × the y direction is 1 × 1 section or 16 sections in which the x direction × the y direction is 4 × 4 sections.

Here, it is assumed that each of a plurality of sections representing regions in the x direction and the y direction in the occupied space is arranged adjacent to one or more other sections.

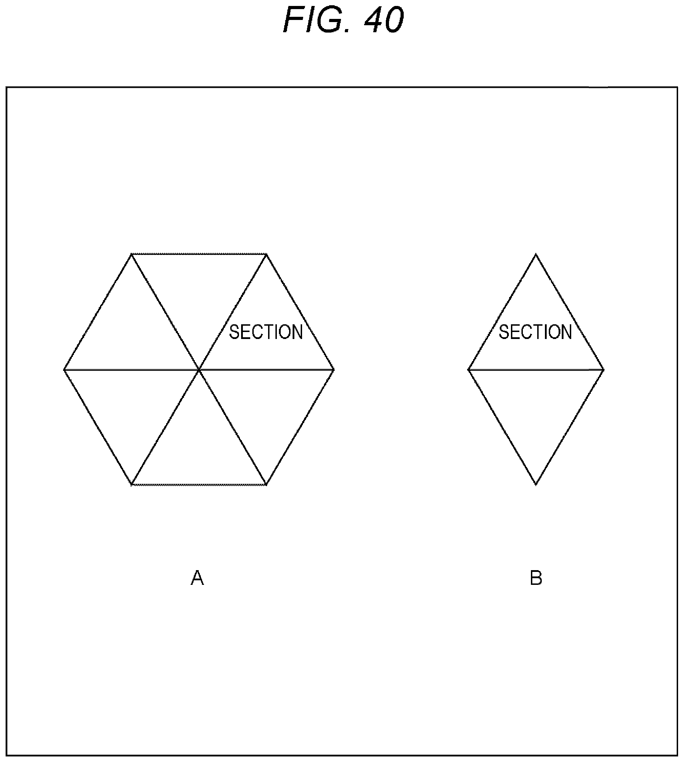

Fig. 40 is a diagram illustrating an example in which a region in the x direction and the y direction in the occupied space in a case where triangular sections are adopted is expressed by the number of sections and arrangement of sections.

A of Fig. 40 illustrates an expression in which six triangular sections are arranged (without overlapping) such that one vertex of each section is located at one point.

B of Fig. 40 illustrates an expression in which two triangular sections are arranged such that one vertex of one triangular section is directed upward, one vertex of the other triangular section is directed downward, and base lines of the two triangular sections are in contact with each other.

The region expressed by the expression of A of Fig. 40 is suitable to represent, for example, a region in the x direction and the y direction in the occupied space occupied by Angelica keiskei.

The region expressed by the expression of B of Fig. 40 is suitable to represent, for example, a region in the x direction and the y direction in the occupied space occupied by green onion.

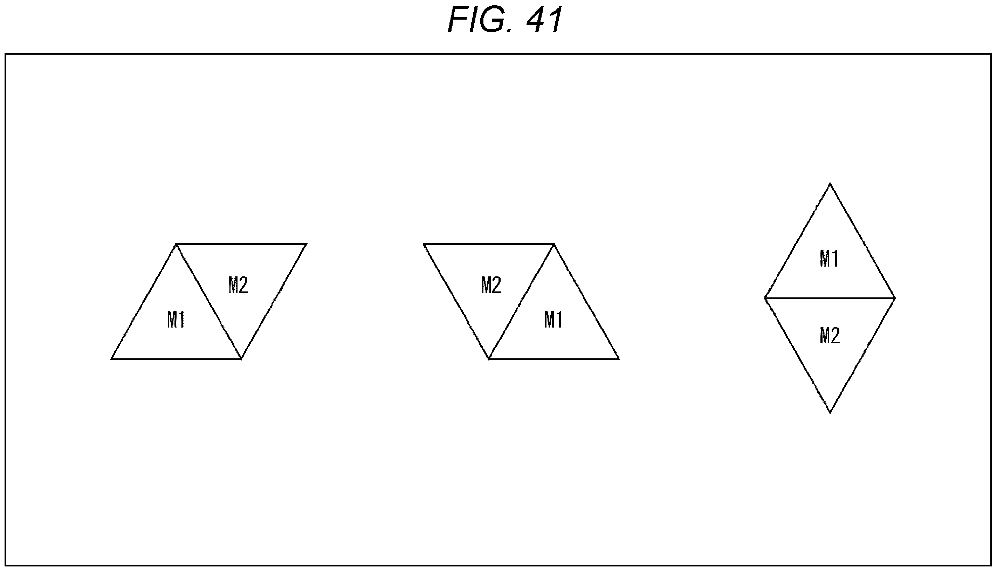

Fig. 41 is a diagram illustrating an example in which a region in the x direction and the y direction in the occupied space in a case where triangular sections are adopted is expressed only by the number of sections.

In a case where a region in the x direction and the y direction in the occupied space is expressed only by the number of sections, the arrangement of the sections is not limited. Therefore, when creating a planting plan, arrangement of available sections is searched, and arrangement of sections for further enhancing, for example, the space filling rate × the diversity rate is determined.

Fig. 41 illustrates an example of arrangement of triangular sections in a case where a region in the x direction and the y direction in the occupied space is expressed only by the number of triangular sections.

In Fig. 41, the number of triangular sections expressing the region in the x direction and the y direction in the occupied space is 2.

A posture of a triangular section with one vertex directed upward is referred to as a standard posture.

In a case where the number of triangular sections expressing the region in the x direction and the y direction in the occupied space is two, the arrangement as illustrated in Fig. 41 can be adopted for, for example, two triangular sections M1 and M2.

That is, an arrangement in which one side of the section M2 is in contact with a right side of the section M1 with the standard posture, an arrangement in which one side of the section M2 is in contact with a left side of the section M1 with the standard posture, an arrangement in which one side of the section M2 is in contact with a bottom side of the section M1 with the standard posture, or the like can be adopted.

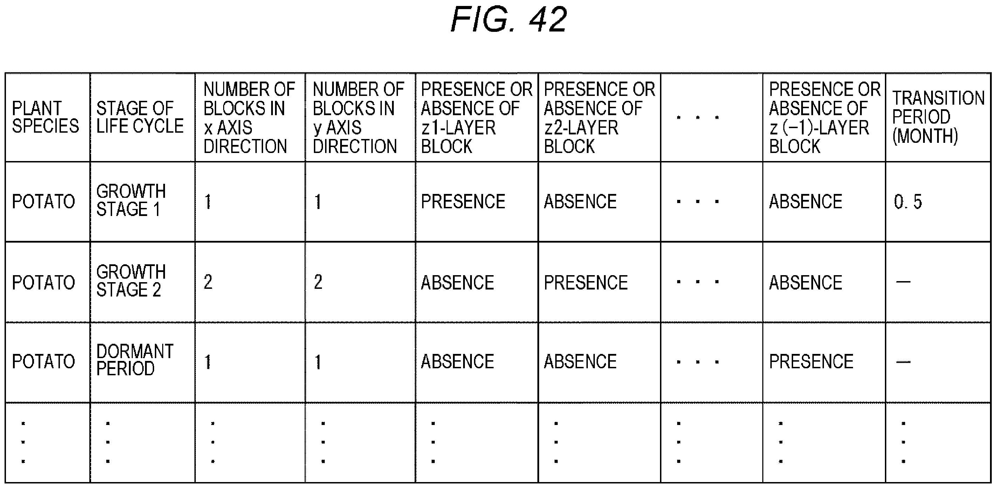

Fig. 42 is a diagram illustrating still another example of the size database.

In Fig. 42, the size information stored in the size database is different from the case of Fig. 17 in that (columns of) a life cycle stage, presence or absence of a z(-1)-layer block, and a transition period are added.

In the size database of Fig. 42, size information indicating a size at each stage of the life cycle, that is, a size of the occupied space occupied by the plant at each stage of the life cycle is stored for the same plant species.

In Fig. 42, stages of the life cycle are largely divided into a growth stage and a dormant period.

The growth stage is a stage in which above-ground parts of the plant that are exposed above the ground grow, and can be divided into more detailed stages, such as growth stages 1, 2, ···, according to a degree of growth.

The dormant period includes a stage in which the above-ground parts wither and become next generation's seeds and a stage in which the above-ground parts exist in the ground as a bulb such as a potato.

In the plants in the dormant period, the plants at the seed stage do not occupy a space including the ground. Thus, it is assumed that the plants at the seed stage and the other plants can be arranged at the same place.

Furthermore, it is assumed that the plants at the bulb stage occupy a space having a depth of one block from the ground surface toward the ground.

For plant species both at the seed stage and the bulb stage, the dormant period can be distinguished into a seed stage and a bulb stage, and the size information can be stored for each of the seed stage and the bulb stage.

The presence or absence of the z(-1)-layer block represents the presence or absence of a (-1)-th block from the ground surface toward the sky, that is, whether or not the plant occupies a space having a depth of one block in the ground. Thus, the presence or absence of the z(-1)-layer block is presence for plants at the bulb stage, and is absence for plants at other stages.

The transition period represents a period from a certain growth stage to a next growth stage. In Fig. 38, for example, the transition period during which a potato at the growth stage 1 transitions to the next growth stage 2 is 0.5 months.

The transition period is set for plants in which the next growth stage is present. Therefore, the transition period is not set for the plant at the last growth stage and the plant in the dormant period.

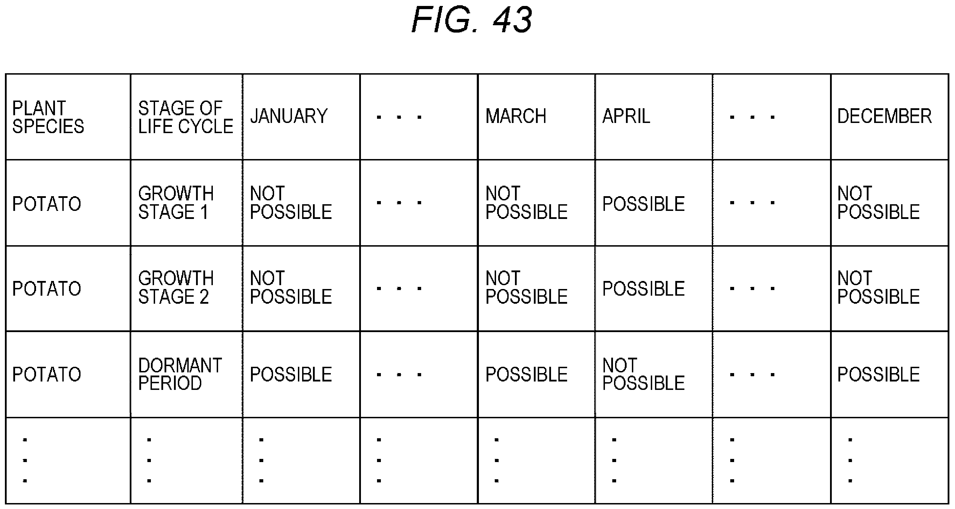

Fig. 43 is a diagram illustrating still another example of the growth period database.

In the growth period database of Fig. 43, life cycle stages are considered as in Fig. 42.

That is, in the growth period database of Fig. 9, the growth period is stored for each plant species, but in the growth period database of Fig. 43, for each stage of the life cycle of each plant species, the growth period during which the plant species at each stage can grow (a period during which the plant species can grow for each stage of the life cycle) is stored.

In a case where a planting plan is created using the size database of Fig. 42 and the growth period database of Fig. 43, in a process of calculating the planting plan as a solution by mathematical programming or a search algorithm, a size of (the occupied space of) the plants at a certain growth stage that are arranged in the occupancy permission space is changed to a size of the plants at the next growth stage after the elapse of the transition period stored in the size database of Fig. 42.

In a case where a size of a certain plant species A at a growth stage #i is changed to a size of the plant species A at the next growth stage #i+1 and thus the occupied space of the plant species A at the growth stage #i+1 and the occupied space of another plant species B overlap with each other, it is possible to create a planting plan for reaping one or both of the plant species A and B such that the overlapping of the occupied spaces is eliminated.

Whether to reap one of the plant species A and B or whether to reap both of the plant species A and B can be selected, for example, in a random manner.

Alternatively, in a case where the database 51 includes the harvest database that stores the required harvest period described in Fig. 5, Fig. 33, and Fig. 34, when the required harvest period has elapsed from the arrangement of the plant species A or B in the occupancy permission space, the plant species for which the required harvest period has elapsed can be preferentially reaped.

Note that, for example, in a case where partial reaping such as removing only leaves on an outer side of a cabbage is performed as the reaping, when the plant species for which the partial reaping is performed is in a growth stage, the growth stage is returned to a previous growth stage. Therefore, a size of the plant species for which partial reaping is performed is changed to a size of the plant species at the returned growth stage.

In a case where a planting plan including reaping is created, the planting plan information can include a navigation message for reaping as described in Fig. 33 and Fig. 34.

In the planting plan using the size database of Fig. 42 and the growth period database of Fig. 43, the plant species of which the growth period is within the cultivation period is selected as a candidate plant species that is a candidate for arrangement in the occupancy permission space on a basis of the growth period stored in the growth period database of Fig. 43.

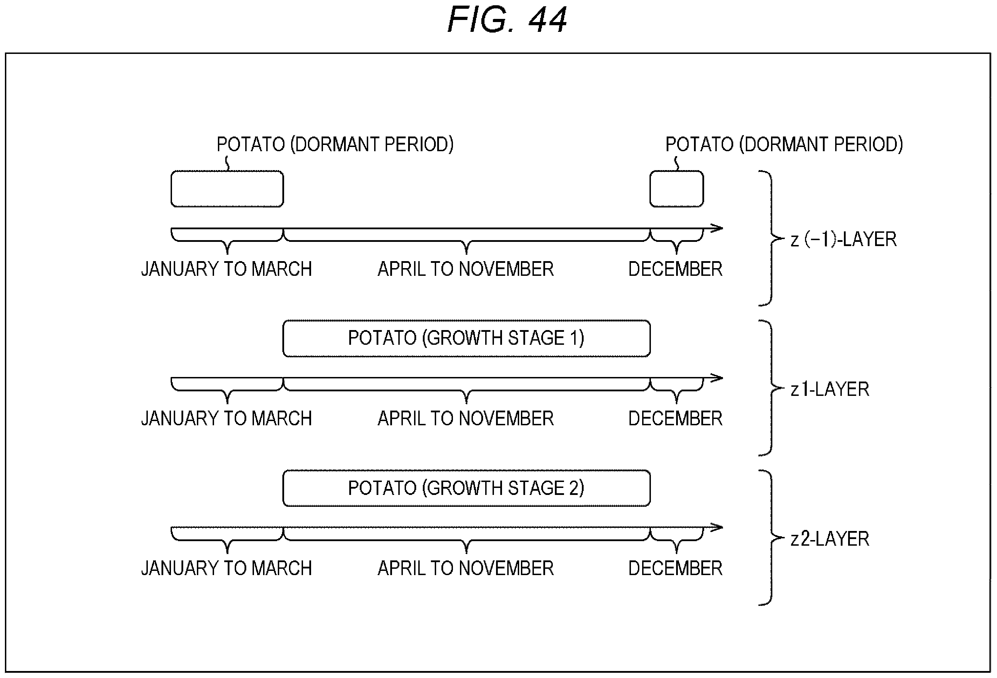

Fig. 44 is a diagram illustrating an example in which a candidate plant species is selected on a basis of the growth period stored in the growth period database of Fig. 43.

In a case where the growth period database of Fig. 43 is used, for the same plant species, a plant species at each stage of the life cycle can be selected as a candidate plant species.

In Fig. 44, the cultivation period is set to one year from January to December, and the candidate plant species is selected.

Furthermore, in Fig. 44, in order to avoid complication of the drawing, only potato in the growth stages 1 and 2 and in the dormant period is illustrated as a candidate plant species. On the other hand, for other plant species of which the growth period is within the cultivation period, a plant species at each stage of the life cycle is also selected as a candidate plant species.

In selection of the candidate plant species, as illustrated in Fig. 44, the candidate plant species can be selected for each z#i-layer block occupied by the plant species with reference to the size database of Fig. 42. As illustrated in Fig. 44, potatoes at the growth stages 1 and 2 have overlapping (coincident) growth periods. On the other hand, the potato at the growth stage 1 occupies a z1-layer block, and the potato at the growth stage 2 occupies a z1-layer block. Therefore, the positions of the potatoes at the growth stages 1 and 2 in the occupied block are different in the height direction. Therefore, the potatoes in the growth stages 1 and 2 can be selected as the target plant species to be planted on the ground surface of the same first-stage block in the same division period.

Note that, in Fig. 43, for example, the potato in the dormant period can be grown in December (can be arranged in the occupancy permission space), but the potato in the growth stages 1 and 2 cannot be grown in December.

Therefore, in a process of calculating a planting plan as a solution by mathematical programming or a search algorithm, in a case where the potato in the growth stage 1 or 2 is present in the occupancy permission space at the start of December, the potato in the growth stage 1 or 2 is changed to the potato in the dormant period that can be grown in December.

In this case, the potato in the dormant period is supposed to be present in the planting plan, but actually, when the plant is planted according to the planting plan, the potato in the growth stage 1 or 2 may remain in a withered state. The potato in the growth stage 1 or 2 remaining in a withered state has no problem in constructing an extended ecosystem from the viewpoint of biological diversity.

Here, in the present specification, the processes to be performed by the computer in accordance with the program are not necessarily performed in time series according to the orders described in the flowcharts. In other words, the processes to be performed by the computer in accordance with the program include processes to be executed in parallel or independently (for example, a parallel process or an object-based process).

Furthermore, the program may be processed by one computer (one processor) or processed in a distributed manner by a plurality of computers. Moreover, the program may be transferred to a remote computer and executed.

Moreover, in the present description, a system means a set of a plurality of components (devices, modules (parts), and the like), and it does not matter whether or not all the components are in the same housing. Therefore, a plurality of devices accommodated in separate housings and connected via a network and one device in which a plurality of modules is accommodated in one housing are both systems.

Note that the embodiments of the present technology are not limited to the above-described embodiments, and various changes can be made without departing from the gist of the present technology.

For example, the present technology can have a cloud computing configuration in which one function is shared and processed in cooperation by a plurality of devices through a network.

Furthermore, each step described in the flowchart described above may be executed by one device, or may be executed in a shared manner by a plurality of devices.

Moreover, in a case where a plurality of processes is included in one step, the plurality of processes included in the one step may be performed by one device, or may be performed by a plurality of devices in a shared manner.

Furthermore, the effects described in the present specification are merely examples and are not restrictive, and other effects may be achieved.

Note that the present technology can have the following configurations.

<1> A program causing a computer to function as an information processing device including:
   a planting planning unit that creates a planting plan including a target plant species which is set as a target of planting and a planting time for which the target plant species can be planted, on a basis of a cultivation period during which plants are cultivated, a growth period during which a plant species can be grown, and biological diversity index information as an index of biological diversity, and generates planting plan information indicating the planting plan.
<2> The program according to <1>, in which
   the planting planning unit creates the planting plan such that the biological diversity is enhanced.
<3> The program according to <1> or <2>, in which
   the planting planning unit creates the planting plan further including a planting position at which the target plant species is to be planted, on a basis of space information indicating a size of an occupancy permission space in which occupancy of the plant is permitted and size information indicating a size of the plant species.
<4> The program according to <3>, in which
   the planting planning unit creates the planting plan by arranging the plant species in the occupancy permission space.
<5> The program according to <4>, in which
   the planting planning unit creates the planting plan such that the biological diversity and a space filling rate are enhanced, the space filling rate indicating a proportion at which the plant species arranged in the occupancy permission space occupies the occupancy permission space.
<6> The program according to any one of <1> to <5>, in which
   the planting planning unit creates the planting plan on a basis of the plant species that can be planted and can be a target of planting.
<7> The program according to any one of <1> to <6>, in which
   the planting planning unit creates the planting plan on a basis of a climate of a planting point where the plant is to be planted.
<8> The program according to any one of <1> to <7>, in which
   the planting plan information is a planting plan graphical user interface (GUI) that expresses the planting plan by using an image.
<9> The program according to <8>, in which
   the planting plan information is the planting plan GUI that expresses the planting plan in time series by using an image.
<10> The program according to <9>, in which
   the planting plan information includes a navigation message that navigates work to be performed by a user.
<11> The program according to any one of <1> to <10>, in which
   the biological diversity index information is information of phylogenetic classifications of plants.
<12> The program according to any one of <1> to <10>, in which
   the biological diversity index information is information as an index of a functional diversity of plants.
<13> The program according to <12>, in which
   the information as an index of the functional diversity is information of microbiota in a co-occurrence relationship with a plant species.
<14> The program according to <12>, in which
   the information as an index of the functional diversity is information of metabolites appearing in a plant species.
<15> The program according to any one of <3> to <5>, in which
   the size information indicates a size of a plant species at each stage of a life cycle.
<16> The program according to <15>, in which
   the growth period is a period during which a plant species can be grown at each stage of the life cycle.
<17> The program according to <5>, in which
   the planting plan information includes information of one or both of the biological diversity and the space filling rate.
<18> The program according to any one of <1> to <17>, in which
   the planting planning unit creates the planting plan by mathematical programming or a search algorithm.
<19> An information processing device including:
   a planting planning unit that creates a planting plan including a target plant species which is set as a target of planting and a planting time for which the target plant species can be planted, on a basis of a cultivation period during which plants are cultivated, a growth period during which a plant species can be grown, and biological diversity index information as an index of biological diversity, and generates planting plan information indicating the planting plan.
<20> An information processing method including:
   creating a planting plan including a target plant species which is set as a target of planting and a planting time for which the target plant species can be planted, on a basis of a cultivation period during which plants are cultivated, a growth period during which a plant species can be grown, and biological diversity index information as an index of biological diversity, and generating planting plan information indicating the planting plan.

### REFERENCE SIGNS LIST

- 11: Terminal
- 12: Server
- 13: Network
- 21: Positioning unit
- 22: Input/output unit
- 22A: Display unit
- 23: Storage drive
- 24: Sensor unit
- 25: Calculation unit
- 26: Communication unit
- 31: User I/F
- 32: Transmission unit
- 33: Reception unit
- 34: Display control unit
- 41: Input/output unit
- 42: Storage drive
- 43: Communication unit
- 44: Calculation unit
- 51: Database
- 52: Planting planning unit

## Claims

1. A program causing a computer to function as an information processing device comprising:
a planting planning unit that creates a planting plan including a target plant species which is set as a target of planting and a planting time for which the target plant species can be planted, on a basis of a cultivation period during which plants are cultivated, a growth period during which a plant species can be grown, and biological diversity index information as an index of biological diversity, and generates planting plan information indicating the planting plan.

2. The program according to claim 1, wherein
the planting planning unit creates the planting plan such that the biological diversity is enhanced.

3. The program according to claim 1, wherein
the planting planning unit creates the planting plan further including a planting position at which the target plant species is to be planted, on a basis of space information indicating a size of an occupancy permission space in which occupancy of the plant is permitted and size information indicating a size of the plant species.

4. The program according to claim 3, wherein
the planting planning unit creates the planting plan by arranging the plant species in the occupancy permission space.

5. The program according to claim 4, wherein
the planting planning unit creates the planting plan such that the biological diversity and a space filling rate are enhanced, the space filling rate indicating a proportion at which the plant species arranged in the occupancy permission space occupies the occupancy permission space.

6. The program according to claim 1, wherein
the planting planning unit creates the planting plan on a basis of the plant species that can be planted and can be a target of planting.

7. The program according to claim 1, wherein
the planting planning unit creates the planting plan on a basis of a climate of a planting point where the plant is to be planted.

8. The program according to claim 1, wherein
the planting plan information is a planting plan graphical user interface (GUI) that expresses the planting plan by using an image.

9. The program according to claim 8, wherein
the planting plan information is the planting plan GUI that expresses the planting plan in time series by using an image.

10. The program according to claim 9, wherein
the planting plan information includes a navigation message that navigates work to be performed by a user.

11. The program according to claim 1, wherein
the biological diversity index information is information of phylogenetic classifications of plants.

12. The program according to claim 1, wherein
the biological diversity index information is information as an index of a functional diversity of plants.

13. The program according to claim 12, wherein
the information as an index of the functional diversity is information of microbiota in a co-occurrence relationship with a plant species.

14. The program according to claim 12, wherein
the information as an index of the functional diversity is information of metabolites appearing in a plant species.

15. The program according to claim 3, wherein
the size information indicates a size of a plant species at each stage of a life cycle.

16. The program according to claim 15, wherein
the growth period is a period during which a plant species can be grown at each stage of the life cycle.

17. The program according to claim 5, wherein
the planting plan information includes information of one or both of the biological diversity and the space filling rate.

18. The program according to claim 1, wherein
the planting planning unit creates the planting plan by mathematical programming or a search algorithm.

19. An information processing device comprising:
a planting planning unit that creates a planting plan including a target plant species which is set as a target of planting and a planting time for which the target plant species can be planted, on a basis of a cultivation period during which plants are cultivated, a growth period during which a plant species can be grown, and biological diversity index information as an index of biological diversity, and generates planting plan information indicating the planting plan.

20. An information processing method comprising:
creating a planting plan including a target plant species which is set as a target of planting and a planting time for which the target plant species can be planted, on a basis of a cultivation period during which plants are cultivated, a growth period during which a plant species can be grown, and biological diversity index information as an index of biological diversity, and generating planting plan information indicating the planting plan.
